(19) Europäisches Patentamt
European Patent Office
Office européen des brevets

(11) EP 3 590 355 A1

(12) EUROPEAN PATENT APPLICATION

(43) Date of publication:
**08.01.2020 Bulletin 2020/02**

(21) Application number: **18305882.5**

(22) Date of filing: **05.07.2018**

(51) Int Cl.:
***A23K 50/80*** *(2016.01)*
***A23K 50/40*** *(2016.01)*
***A23K 10/14*** *(2016.01)*
***A23K 10/26*** *(2016.01)*
***A23K 20/147*** *(2016.01)*
***A23J 1/04*** *(2006.01)*
***A23J 3/34*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Spécialités Pet Food**
**56250 Elven (FR)**

(72) Inventors:
- **FOURNIER, Vincent**
  **56860 SENE (FR)**
- **LEDUC, Alexandre**
  **14530 LUC SUR MER (FR)**

(74) Representative: **Regimbeau**
**20, rue de Chazelles**
**75847 Paris Cedex 17 (FR)**

(54) **MYOTROPIC PEPTIDES AND USES THEREOF**

(57) The present invention relates to a new peptide of sequence KNPEQ having a myotropic activity, and functional peptidic variants thereof, as well as to compositions comprising same, and to their uses, in particular for improving digestive health in a subject such as a fish.

EP 3 590 355 A1

## Description

### FIELD OF THE INVENTION

The present invention relates to a new peptide having a myotropic activity, to compositions comprising same, and their uses, in particular for improving digestive health in a subject, especially in fish.

### BACKGROUND OF THE INVENTION

In fish, tachykinins, cholecystokinin, galanin, ghrelin, calcitonin gene-related peptide, neuropeptide Y and others are known to carry out myotropic activities on intestine [1]. They participate in the mobility of feed through digestive system and release of feces. They are also involved *via* gastric emptying to return of appetite in fish. In fish, feed transit time through digestive system is affected by many factors such as environment (temperature, salinity), physiology, and feed composition and formulation [2]. For the last one, it has been documented that incorporation of plant based meal in carnivorous fish feeds tend to increase the residence time of feed into the intestine due to the high fiber and sugar content [3]. Consequences could be a lower feed utilization as well as deterioration of gut health due to carbohydrate fermentation issue. Feed transit time is an important parameter to take into account when formulating fish feeds because it influences feeding rate and fish growth performances, two parameters that are very precisely monitored in aquaculture. Feed transit time is also very important for managing the feed efficiency.

With the development of sustainable aquaculture, a major effort is being made to reduce the use of fishmeal (FM), for ecological and economic concerns. Many studies focus on the replacement of FM by other sources of protein such as plant-based meal (PBM). Nevertheless, PBM contains antinutritional factors and is not adapted to diets of carnivorous fish such as European seabass (*Dicentrarchus labrax*) [4]. Amino acid compositions of PBM are imbalanced and do not meet the nutritional requirements for carnivorous fish species. Consequently, such feeds including PBM at high level have to be supplemented with essential free amino acids to avoid nutritional deficiency [5]. In addition, low palatability of PBM remains an issue and requires supplementation with attractants to stimulate feeding behavior of carnivorous fish fed plant-based diets.

Since few years, protein hydrolysates from fisheries and aquaculture co-products are being studied more and more as a promising alternative ingredient to FM. Indeed, the peptides of low molecular masses that are found at high levels in protein hydrolysates manufactured from fish and crustacean co-products showed nutrition, palatability and health improvement in fish [6,7].

In a previous study, Robert et al. (2014) demonstrated that the major protein found in shrimp hydrolysate was hemocyanin, a well-documented protein able to generate functional hydrolytic peptides [8].

There is thus a need in the art for new proteinaceous materials that (i) are both palatable and nutritionally balanced, and (ii) do not affect or impair digestive health, for their use as feed ingredients, in particular as fish feed ingredients.

### SUMMARY OF THE INVENTION

The present invention addresses this need by providing a new peptide having a myotropic activity.

It is thus an object of the present invention to provide a peptide of sequence KNPEQ or a functional peptidic variant thereof.

Another object of the present invention is to provide a protein hydrolysate comprising said peptide or variant.

Yet another object of the present invention concerns this peptide or variant or this protein hydrolysate for use in a method for improving digestive comfort and/or balance in a subject.

A further object of the present invention concerns this peptide or variant or this protein hydrolysate for use in a method for accelerating feed transit time in a subject.

It is yet another object of the present invention to provide an edible composition comprising the peptide or variant of the invention.

Further, an object of the present invention is related to a method for preparing a fish feed.

### BRIEF DESCRIPTION OF THE FIGURES

**Figure 1.** Myotropic activity of protein hydrolysate from different origin, measured on isolated perfused intestine of European seabass.

**Figure 2:** Results of *in vivo* feeding trial with shrimp hydrolysate. **A.** SGR of fish at the end of the trial. Bars (SEM) with different superscript letters differ significantly according to Tukey's multiple comparison test. **B.** Dry feces (g) collected at different time after feeding. Values are mean of triplicate groups and presented as mean±SD. Bars with different superscripts in the same row are significantly different ($P \leq 0.05$). **C.** Kinetic of feces release expressed in relative amount. Error bars represent SEM; (*) represent a significantly difference according to Tukey's multiple comparison test. Abbreviations: FM5, 5% fish meal diet; FM20, 20% fish meal diet; SH, shrimp hydrolysate diet; SGR, specific growth rate.

**Figure 3:** Purification of myotropic peptide in shrimp hydrolysate. **A.** Myotropic effect of shrimp hydrolysate before purification steps. **B.** Second purification step by reverse-phase high performance liquid chromatography. Myotropic fraction is designated with the arrow. **C.** Myotropic effect of fraction 12.

**Figure 4:** Peptide identification. **A.** MS/MS spectrum of natural KNPEQ. K/Q is due to the ESI-MS/MS precision. **B.** KNPEQ localization in hemocyanin protein from *Litopenaeus vannamei* (CAA57880.1), KNPEQ sequence is squared. **C.** Multiple hemocyanin-related sequence alignment centered to KNPEQ position (squared). Lv-hemocyanin: hemocyanin from *Litopenaeus vannamei* (CAA57880.1); *Al*-hemocyanin B chain: hemocyanin B chain from *Astacus leptodactylus* (P83180.1); Ha-Pseudohemocyanin 2: Pseudohemocyanin-2 from *Homarus americanus* (Q6KF81.1); Ca-hemocyanin: Hemocyanin subunit 2 from *Carcinus aestuarii* (P84293.1); *Pv*-hemocyanin: Hemocyanin from *Palinurus vulgaris* (P80888.2); *Pi*-hemocyanin A, B and C: Hemocyanin A, B and C chains from *Panulirus interruptus* (P10787.1, P04254.2, P80096.1)

**Figure 5:** Dose dependent myotropic activity of synthetic KNPEQ peptide. **A.** Synthetic KNPEQ at 1 and 10 μM effect is frank and transitive. **B.** Synthetic KNPEQ at 100μM effect is slight and prolonged.

## DETAILED DESCRIPTION OF THE INVENTION

DEFINITIONS

Unless specifically stated otherwise, percentages are expressed herein by weight.

In the present disclosure, ranges are stated in shorthand, so as to avoid having to set out at length and describe each and every value within the range. Any appropriate value within the range can be selected, where appropriate, as the upper value, lower value, or the terminus of the range. For example, a range of 0.1-1.0 represents the terminal values of 0.1 and 1.0, as well as the intermediate values of 0.2, 0.3, 0.4, 0.5, 0.6, 0.7, 0.8, 0.9, and all intermediate ranges encompassed within 0.1-1.0, such as 0.2-0.5, 0.2-0.8, 0.7-1.0, etc.

As used throughout, the singular form of a word includes the plural, and vice versa, unless the context clearly dictates otherwise. Thus, the references "a", "an", and "the" are generally inclusive of the plurals of the respective terms. For example, reference to "a method" or "a feed" includes a plurality of such "methods" or "feeds". Similarly, the words "comprise", "comprises", and "comprising" are to be interpreted inclusively. Likewise the terms "include", "including" and "or" should all be construed to be inclusive. All these terms however have to be considered as encompassing exclusive embodiments that may also be referred to using words such as "consist of".

The methods and compositions and other embodiments exemplified here are not limited to the particular methodologies, protocols, and reagents that are described herein because, as the skilled artisan will appreciate, they may vary.

Unless defined otherwise, all technical and scientific terms, terms of art, and acronyms used herein have the meanings commonly understood by the skilled artisan in the field(s) of the invention, or in the field(s) where the term is used. Although any compositions, methods, articles of manufacture, or other means or materials similar or equivalent to those described herein can be used in the practice of the present invention, the preferred compositions, methods, articles of manufacture, or other means or materials are described herein.

The term "about" as used herein when referring to a measurable value such as an amount, a temporal duration, and the like, is meant to encompass variations of ±15%, more preferably ±10%, even more preferably ±5% from the specified value, as such variations are appropriate to reproduce the disclosed methods and products.

In the context of the present invention, the term "fish" refers to a "cultured fish", i.e., any fish species that can be reared for the purposes of supplying dietary fish to the population (humans and animals, in particular, companion animals).

There are 3 distinct "groups of fish" that are defined by the nutritional requirements and feeding habits of the fish: the group of carnivorous fish, the group of omnivorous fish, and the group of herbivorous fish.

As examples of carnivorous fish species, one can cite pink salmon (*Oncorhynchus gorbuscha*), chum salmon (*Oncorhynchus keta*), coho salmon (*Oncorhynchus kisutch*), masu salmon (*Oncorhynchus masou*), rainbow trout (*Oncorhynchus mykiss*), sockeye salmon (*Oncorhynchus nerka*), Atlantic salmon (*Salmo salar*), sea trout (*Salmo trutta*), brook trout (*Salvelinus fontinalis*), lake trout (*Salvelinus namaycush*), Japanese eel (*Anguilla japonica*), American eel (*Anguilla rostrata*), European eel (*Anguilla Anguilla*), largemouth black bass (*Micropterus salmoides*), greater amberjack (*Seriola dumerili*), Japanese amberjack (*Seriola quinqueradiata*), Japanese jack mackerel (*Trachurus japonicas*), dark seabream (*Acanthopagrus schlegeli*), white seabream (*Diplodus sargus*), crimson seabream (*Evynnis japonica*), red seabream (*Pagrus major*), red porgy (*Pagrus pagrus*), goldlined seabream (*Rhabdosargus sarba*), gilthead seabream (*Sparus aurata*), red drum (*Sciaenops ocellatus*), Southern bluefin tuna (*Thunnus maccoyii*), Northern bluefin tuna (*Thunnus thynnus*), climbing perch (*Anabas testudineus*), turbot (*Psetta maxima*), bastard halibut (*Paralichthys olivaceus*), common sole (*Solea vulgaris*), Senegalese sole (*Solea senegalensis*), Atlantic halibut (*Hippoglossus Hippoglossus*), striped bass (*Morone saxatilis*), barramundi (*Lates calcarifer*), Nile perch (*Lates niloticus*), Atlantic cod (*Gadus morhua*), European seabass (*Dicentrarchus labrax*), grouper (*Epinephelus sp.*) spotted coralgrouper (*Plectropomus maculates*), European perch (*Perca fluviatilis*), meagre (*Argyrosomus regius*), cobia *(Rachycentron canadum).*

As examples of omnivorous fish species, one can cite barb species (*Puntius spp.*), black carp (*Mylopharyngodon piceus*), Chinese mud carp (*Cirrhinus molitorella*), climbing perch (*Anabas testudineus*), common carp (*Cyprinus carpio*), crucian carp (*Carassius carassius*), pirapatinga (*Piaractus brachypomus*), silver or Java barb (*Barbonymus gonionotus*), Indian mrigal carp (*Cirrhinus mrigala*), Pacu (*Piaractus mesopotamicus*), Tilapia species [*Oreochromis spp.* (*niloticus* and *mossambicus* and hybrids), *Sarotherodon spp., Tilapia spp.*], catfish species [*Clarias spp.* (*gariepinus, macrocephalus,* hybrids), *Pangasius spp.* (*Pangasius hypophthalmus, Pangasius pangasius*), channel catfish (*Ictalurus punctatus*), amur catfish (*Silurus asotus*), Chinese longsnout catfish (*Leiocassis longirostris*), yellow head catfish (*Pelteobagrus fulvidraco*)].

As examples of herbivorous fish species, one can cite Chinese silver carp (*Hypophtalmichthys molitrix*), Indian catla carp (*Catla catla*), Indian rohu carp (*Labeo rohita*), milkfish (*Chanos chanos*), mullet (*Mugil cephalus*), Chinese grass carp (*Ctenopharyngodon idella*), Chinese "Wuchang" bream (*Megalobrama amblycephala*), large gourami (*Osphronemus goramy*), snakeskin gourami (*Trichigaster pectoralis*), some Tilapia species (*Tilapia rendalli* and *Tilapia zillii*), giant gourami (*Osphronemus goramy*), bighead carp (*Hypophthalmichthys nobilis* (filter feeder)).

As used herein, "crustaceans" refer to at least the following families: Penaeidae, Palaemonidae, Pandalidae, Galatheidae, Euphausiidae, Mysidae, and Nephropidae. Typically, the term "crustacean" refers to a large family of marine arthropods, which includes common members as crabs, lobsters, crayfish, shrimp, krill, and barnacles. Preferred crustaceans in the context of the present invention are shrimp, krill, and crab, yet preferably shrimp.

The term "feed" or "diet" as used herein means one or more products or compositions that are intended for ingestion by fish and provide at least one nutrient to the fish. The composition of the feed depends on the group of fish that will be fed said feed. A feed for carnivorous fish is different from a feed for omnivorous fish and from a feed for herbivorous fish, the two latter feeds being also different from each other. Typically, fish, especially carnivorous fish, need proteins/peptides/amino acids, fat, minerals, and vitamins in order to grow and to be in good health.

The term "feed" or "diet" according to the present invention excludes "baits" that are only used to attract fish.

Fish "feed" or fish "diet" is typically composed of one or more protein sources such as, but not limited to, marine protein including, *inter alia,* fish meal and krill meal, vegetable protein (e.g., soy meal, rapeseed meal, wheat gluten, corn gluten, lupine meal, pea meal, sunflower seed meal, and rice meal), and slaughterhouse by-products such as blood meal, bone meal, feather meal, and poultry meal. Fish "feed" or fish "diet" further contains fats such as fish oil and/or plant-based oils (e.g., rapeseed oil and soy oil), and/or land-based fats (in particular, poultry fat) as energy sources. It may also contain a binder, usually in the form of a starch-containing raw material, such as wheat or wheat flour, potato flour, rice, rice flour, pea flour, beans or tapioca flour, to give the feed the desired strength and form stability. Usually, fish "feed" or fish "diet" further contains minerals and vitamins for taking care of good growth and good health of the fish. The feed may also contain further ingredients such as pigments. Thus, a typical fish "feed" or fish "diet" is a composite feed wherein the relative amounts between proteins, fat, carbohydrates, vitamins, minerals and any other ingredients is calculated to be optimally adapted to the nutritional needs of the group of fish and of the fish species based on the age of the fish, the rearing method and the environmental conditions. It is common that feeding is done with only one type of feed at once and with that every piece of feed is nutritionally adequate. Thus, common fish "feed" or fish "diet" has an approximate composition of 25-60 wt% protein, 5-40 wt% lipid, and 3-15 wt% moisture.

Typical fish "feed" or fish "diet" contains more than one feed ingredient. Thus, fish "feed" or fish "diet" as disclosed herein advantageously contains at least one feed ingredient of the present invention and at least one other conventional fish feed ingredient such as fish meal, plant meal, and the like.

A "feed ingredient" may be under various forms. It can be either a liquid (e.g., having from about 10% to about 30% dry matter), or a liquid concentrate (e.g., having from about 30 to about 60% dry matter), or a paste (e.g., having from about 60 to about 85% dry matter), or a powder (e.g., having from about 85 to about 100% dry matter).

The term "pellet" used herein refers to particulate chunks or pieces formed by either a press or extrusion process. The pieces can vary in sizes and/or shapes, depending on the process or the equipment. Most fish feed pellets have a cylindrical shape. Since the fish is farmed using a fish feed product, starting with fingerlings (having the weight of about 1 g) up to large fish having a weight of several kilograms (e.g. 4 to 5 kg), various pellet sizes are required and used in the feeding at different stages of the growth of the fish. Size and/or shape of the pellets have indeed to be adapted to the size of the fish. Thus, during one cycle of fish rearing, pellets of increasing sizes are used as the fish is growing. For example, in the farming of salmon, 6 or 7 different pellet sizes are typically needed when using the existing fish feeds. Also, in seabass farming, pellets of 5 different sizes are commonly used to comply with the fish growth. The size of the pellet to be used is determined by the size of the fish in accordance with prior practice.

As used herein, the terms "feed pellets" fulfill both definitions of "feed" and "pellets" above. Thus, the terms "feed pellets" refer not only to the composition and formulation of the feed but also to the physical structure, the shape, the size, and the density of the pellets.

The term "amino acid" means a molecule containing both an amino group and a carboxyl group. In some embodiments, the amino acids are α-, β-, γ- or δ-amino acids, including their stereoisomers and racemates.

By the term "free amino acids", it is meant herein amino acids that are individually present as unbound ingredients in a product or a composition. Free amino acids do not form part or are not contained into peptides or proteins. When contained in a feed ingredient, the free amino acids are not expected to significantly react *in situ* with any other ingredient that may be present in the feed ingredient. They are thus comprised as such in the feed ingredient.

By the term "peptide" or "oligopeptide", it is meant herein a short chain of amino acids. In particular, a "peptide" in the present context is characterized by its molecular weight (MW) expressed in Dalton (Da). For example, a chain of from 2 to 100 amino acids in length is typically designated as a peptide.

By the term "free peptide", it is meant herein a peptide that is individually present as unbound ingredient in a product or a composition. Free peptides do not form part or are not contained into proteins. When contained in a product (a protein hydrolysate or an edible composition or a fish feed), the free peptides are not expected to significantly react *in situ* with any other ingredient that may also be present. They are thus comprised as such in a product (a protein hydrolysate or an edible composition or a fish feed).

By the term "functional peptidic variant", it is meant a peptidic homolog comprising one or more conservative amino acid substitutions.

By the term "peptidic homolog", it is meant herein a peptide having a sequence different from SEQ ID No. 1, optionally having a size different from that of the peptide of SEQ ID No. 1, but necessarily having an activity equivalent or similar or at least equal to the activity of interest of the peptide of SEQ ID No. 1 (i.e., myotropic activity).

By the term "conservative amino acid substitution", it is meant herein an amino acid substitution that does not substantially affect or decrease the biological activity of interest of the peptide of SEQ ID No. 1, i.e., that does not substantially affect or decrease the myotropic activity of said peptide. Non-limiting examples of a conservative amino acid substitution are given in Table 1 below.

Table 1

| Original amino acid | Conservative substitutions |
|---|---|
| Ala | Val, Ile, Leu, Met |
| Asp | Glu, Asn |
| Asn | Gln, Asp, Glu |
| Arg | Lys |
| Glu | Gln, Asp, Asn |
| Gln | Asn, Asp, Glu |
| Ile | Val, Leu, Ala, Met |
| Leu | Ile, Val, Ala, Met |
| Lys | Arg |
| Met | Ala, Val, Ile, Leu |
| Phe | Tyr |
| Ser | Thr |
| Thr | Ser |
| Tyr | Phe |
| Val | Ile, Leu, Ala, Met |

As used herein, the term "isolated" means a biological material that has been substantially separated or purified away from other biological materials in the cell of the organism in which the material naturally occurs. Peptides that have been "isolated" include peptides purified by standard purification techniques, as well as peptides that have been chemically synthesized.

The term "purified" can be absolute purity (100% pure) but this is not a requirement. Thus, for example, a purified peptide is a preparation in which the peptide is more enriched than the peptide in its natural environment within a cell. In particular, a peptide is purified if it represents at least about 60%, preferably at least about 70%, more preferably at least about 80%, yet more preferably at least about 90%, even more preferably at least about 95%, yet even more preferably at least about 98%, yet even more preferably at least about 99%, of the total peptidic content of a preparation (or sample or composition or material or mix or extract).

In the field of the present invention, the skilled artisan is familiar with "zootechnical parameters" which include survival rate, feed intake or feed consumption (Fc), specific growth rate (SGR), and feed conversion ratio (FCR). These parameters are commonly used in aquaculture to assess, e.g., how/what fish eat or prefer to eat, how fish grow, how fish utilize the feed ingested, etc. They are determined using conventional experimental measures and mathematical equations that are well-known in the art.

The "specific growth rate" parameter (SGR) is expressed as percentage increase in fish biomass from day to day. SGR (expressed, e.g., in %/day) does not take into account the amount of feed fed to obtain growth. It is a measure of growth rate on a determined period only. SGR is influenced by the level of feed consumed and the digestibility of the fish feed and its profile in terms of protein and fat ratio, as well as of amino acid and fatty acid compositions.

The "feed consumption" or "feed intake" parameter (Fc) is defined as the weight of the feed really consumed by the fish in the pen during a given period of time. Fc can be calculated using Equation (1):

$$Fc = Fd - Fu,$$

wherein Fd is the dry weight of the total feed that is distributed in excess in the pen during said period of time, and Fu is the dry weight of the total uneaten feed that is recovered daily from the pen during said period of time.

Fc can be expressed in g feed / kg of average biomass of fish / day.

The "feed conversion ratio" parameter (FCR) is an economic parameter indicating how efficiently the fish grows on the feed. Fish growth actually corresponds to protein, fat and water deposition in the muscle. FCR thus reflects the "feed utilization" by the fish, or the "feed efficiency". FCR varies between fish species and also with the size of the fish. As an example, in Atlantic salmon, FCR may typically be from about 0.7 to about 2. Industrial fish feed in the form of pressed feed and extruded feed contains low amounts of water, typically from about 5 to about 10%. The fish body has a higher water content. This is the reason why the FCR of different feeds should theoretically take into account the water content of the feeds as water does not contribute to growth. More precisely, the FCR should theoretically be calculated on a dry matter basis. However, as the water content is within a narrow range and as it is cumbersome for the fish farmer to calculate dry matter FCR, FCR is usually calculated on the feed including water content.

The terms "promote", "increase", "enhance", and "improve" are used herein interchangeably. A biological or technical function or activity or effect of interest is "promoted" if it is better/higher in a tested group of fish when compared to a standard group of fish. As an example, digestive health or digestive comfort or digestive balance is improved if digestive health or comfort or balance of a tested group of fish fed a complete diet made of the feed ingredient of the present invention and of a conventional low fish meal feed (e.g., having a fish meal content of about 5% by weight) is better/higher than digestive health or comfort or balance of a standard group of fish fed said conventional low fish meal feed only. As another example, digestive health or digestive comfort or digestive balance is improved when feed transit is accelerated or when feed transit time is reduced.

As used herein, "a tested group of fish" is a group of fish fed with a complete diet made of the feed ingredient of the present invention and of a conventional low fish meal feed (e.g., having a fish meal content of about 5% by weight). "A standard group of fish" is a group of fish fed a conventional low fish meal feed only (e.g., having a fish meal content of about 5% by weight). "A control group of fish" is a group of fish fed a conventional high fish meal feed only (e.g., having a fish meal content of about 20% by weight).

A "myotropic compound " is a compound having a myotropic activity. This means that this compound will have an effect on muscular fiber (contraction) once in contact with a tissue containing such muscular fiber.

When referring to a kit, the term "single package" means that the components of said kit are physically associated in or with one or more containers and considered as a unit for manufacture, distribution, sale, or use. Containers include, but are not limited to, bags, boxes, cartons, bottles, pouches, packages of any type or design or material, over-wrap, shrink-wrap, stapled or otherwise affixed components, or combinations thereof. A single package may be containers of individual components physically associated such that they are considered as forming a unit for manufacture, distribution, sale, or use.

As used herein, "means for communicating information or instructions" is a kit component under any form suitable for providing information, instructions, recommendations, and/or warranties, etc. Such a means can comprise a document, digital storage media, optical storage media, audio presentation, visual display containing information. The means of communication can be a displayed web site, brochure, product label, package insert, advertisement, visual display, etc.

"Coating" or "top-coating", as used herein, refers to topical deposition of a product or a composition onto the surface of a fish feed, such as by spraying, dusting, and the like.

"Inclusion" as used herein, refers to addition of a product or a composition internally to a fish feed preparation, by mixing it with the fish feed preparation, before further processing steps for obtaining the final fish feed.

The term "palatability" means a preference of a fish for one feed to another. Palatability refers to the overall willingness of a fish to eat a certain feed. Advantageously but not necessarily, palatability further refers to the capacity of the eaten feed to satisfy the fish. Whenever a fish shows a preference, for example, for one of two or more feeds, the preferred feed is more "palatable" and has "enhanced palatability". The palatability of one feed compared to one or more other feeds can be determined, for example, by testing consumption of the feeds by fish. Such preference can arise from any of the fish senses, but typically is related to, *inter alia,* taste, smell, aroma, flavour, texture, and/or mouth feel.

Unless otherwise specified, weights are herein expressed in grams.

DESCRIPTION OF PREFERRED EMBODIMENTS

In a first aspect, the present invention relates to a peptide of sequence KNPEQ (SEQ ID No. 1) or functional peptidic variants thereof.

In the context of the present invention, when it is referred to « the peptide of sequence KNPEQ (SEQ ID No. 1) » or « the peptide of the invention », it is also referred to « functional peptidic variants thereof ».

Non-limiting examples of theoretical functional peptidic variants of the peptide KNPEQ are given in Table 2 below.

Table 2

| Original amino acid | Conservative substitutions |
|---|---|
| K (Lys) | R (Arg) |
| N (Asn) | Q (Gln) |
| E (Glu) | D (Asp) |
| Q (Gln) | N (Asn) |

As shown in the Example Section below, the peptide of SEQ ID No. 1 is cleaved from hemocyanin protein. If peptides derived from hemocyanin had already demonstrated antibacterial, anti-cancer and immunostimulatory properties, it is the first time that such myotropic activity is demonstrated in a peptide derived from hemocyanin. KNPEQ does not share any sequence homology with myotropic peptides already identified in fish [1] which makes it a new class of myotropic.

According to an embodiment, the peptide of the present invention is isolated and/or purified.

According to an embodiment, the peptide of the invention is natural or synthetic.

A natural peptide is typically obtained through one or more hydrolysis reactions from proteinaceous starting material. Hydrolysis is well known in the art. Hence, the skilled artisan is able to settle appropriate hydrolysis conditions to obtain peptides.

Alternatively, the peptide of the invention can be synthesized by a number of different techniques including solution and solid phase synthesis using traditional BOC or FMOC protection. The different techniques available so far are part of the common general knowledge. The thus synthesized peptide is a synthetic peptide which can then advantageously be purified by reverse-phase chromatography and optionally lyophilized. Synthetic peptides can be isolated and used as such or used in the form of the base or a salt thereof. Examples of salts include, without limitation, acetate, chloride, sulfate, and phosphate salts.

Another aspect of the present invention is related to a protein hydrolysate comprising the peptide of sequence KNPEQ (SEQ ID No. 1).

Preferably, the peptide KNPEQ is comprised in said protein hydrolysate in the form of a free peptide.

In a preferred embodiment, the protein hydrolysate of the invention is a crustacean protein hydrolysate. Such a crustacean protein hydrolysate is preferably selected from the group consisting of krill protein hydrolysates, shrimp protein hydrolysates, crab protein hydrolysates, and combinations thereof.

Further aspects of the present invention concern the peptide of sequence KNPEQ (SEQ ID No. 1) or the protein hydrolysate of the invention, for use:

- as a myotropic compound; or
- in a method for improving digestive comfort or digestive balance in a subject; or
- in a method for accelerating feed transit in a subject.

Feed transit time through digestive system is very important in fish culture as this parameter could impact both the feeding rate, the growth rate of fish and the feed utilization. As shown in the Example section below, shrimp hydrolysate myotropic activity was monitored on European seabass (*Dicentrarchus labrax*), *in vivo,* during a feeding trial with low fish meal diets including shrimp hydrolysate, and *in vitro* on isolated intestine perfused with hydrolysate extracts. Shrimp hydrolysate was able to accelerate feces emission time and to lead to intestine contraction, thereby improving digestive health or digestive comfort or digestive balance in fish. After different steps of shrimp hydrolysate fractioning, the Inventors could demonstrate that the KNPEQ mimetic peptide was able to stimulate the contraction of fish intestine in a transitive manner.

In all aspects relating to applications of the peptide of sequence KNPEQ (SEQ ID No. 1) or the protein hydrolysate of the invention (i.e., the peptide or the protein hydrolysate for use as disclosed herein), said subject is preferably an animal, more preferably a fish, yet more preferably a carnivorous fish.

Another aspect of the present invention is directed to an edible composition comprising the peptide of sequence KNPEQ (SEQ ID No. 1) or the protein hydrolysate of the invention.

Preferably, this edible composition is an animal feed, more preferably a fish feed, yet more preferably a carnivorous fish feed. Alternatively, this edible composition is an ingredient of an animal feed, preferably an ingredient of a fish feed, yet preferably an ingredient of a carnivorous fish feed. In the latter case, the edible composition advantageously further comprises one or more additional animal feed ingredients, preferably one or more additional fish feed ingredients, yet preferably one or more additional carnivorous fish feed ingredients.

Another aspect relates to the edible composition of the invention for use in a method for feeding animal, preferably fish, yet preferably carnivorous fish.

In a further aspect, the present invention is related to a method for preparing a fish feed, comprising the step of adding the edible composition as disclosed herein to a fish feed formulation.

In this method, said edible composition is preferably added to said fish feed formulation by inclusion and/or by top-coating.

In particular, when applied by top-coating, the peptide or the protein hydrolysate may be applied as it is by spraying or dusting on top of the pellet. Alternatively, the peptide or the protein hydrolysate may be mixed with oil of marine and/or land based and/or plant origin, to be then applied by spraying.

In the preparation method of the invention, the edible composition is preferably added in an amount ranging from about 0.3% to about 10% by weight of said fish feed, more preferably in an amount ranging from 0.3% to 10% by weight of said fish feed, yet more preferably in an amount ranging from about 1% to about 5% by weight of said fish feed, even more preferably in an amount ranging from 1% to 5% by weight of said fish feed.

The present invention further concerns a kit for implementing the herein-disclosed preparation method or for all uses and applications as described herein, said kit comprising, in one or more containers in a single package:

- At least one peptide and/or at least one protein hydrolysate and/or at least one edible composition as disclosed herein;
- Optionally, at least one animal feed ingredient;
- Optionally, a means for communicating information about or instructions for using said peptide and/or said protein hydrolysate and/or said edible composition, and optionally said animal feed ingredient.

In all aspects of the present invention considering an animal feed, it is preferably a fish feed.

In all aspects of the present invention considering a fish feed, it is preferably a fish feed pellet.

In all aspects of the present invention considering fish, it is preferably carnivorous fish.

The above-described peptide and protein hydrolysates provide significant advantages over the prior art, in particular when considering that, in a context of sustainable development of aquaculture looking for new sources of protein and functional ingredients, marine protein hydrolysates are becoming more and more popular for their palatability, nutritional and health benefits.

Those advantages over the prior art become all the more significant if bearing in mind that in fish, gastrointestinal transit time of feed can be impacted by many parameters such as the fish physiology, environmental factors but also the composition of the feed, and the feed processing parameters. Difference in feed transit time can impact feeding rate, nutrient digestibility of feed, and return of appetite. Thus, in the context of aquaculture, the present invention represents an innovative solution to manage feed transit time depending on feed formulation and breeding conditions of fish.

More generally, the above-described peptide and protein hydrolysates can be of interest for improving digestive comfort or digestive balance in any subject such as humans and animals, including pets, or for controlling feed transit time in any subject such as humans and animals, including pets. Yet, the above-described peptide and protein hydrolysates can be of interest for preventing and/or treating digestive disorders in any subject, such as humans and animals, including pets. Digestive disorders can be, *inter alia,* irritable bowel syndrome, abnormal intestinal pain, constipation, intestinal obstruction, and the like. The above-described peptide and protein hydrolysates can thus be included in pharmaceutical or veterinary compositions.

The present invention is further described by reference to the following Examples. These Examples are presented here for the purpose of illustration only and are not intended to limit the scope of the invention. The Examples below help to illustrate further advantages of the present invention.

## EXAMPLES

As shown below, the present Inventors investigated the myotropic properties of dietary shrimp hydrolysate as well as the growth performances on behalf of a trial conducted in European seabass. In addition, *in vitro* trials were carried out on isolated intestine sampled in European seabass to evaluate the myotropic activity of shrimp hydrolysate and its fractions. Finally, peptidomic tools were set up to identify and to characterize the peptide of the invention which is responsible for the myotropic activity.

### 1. Material and Methods

*1.1. Diets*

Five diets were formulated by Diana Aqua (Symrise group, Elven, France) (Table 3 below): 2 diets containing fishmeal (FM) at 5% and 20% of dry matter (diets FM5 and FM20) and 3 diets containing graded levels of a commercial shrimp protein hydrolysate (SH, commercial name Actipal HP1), included at 1%, 5%, and 10% of dry matter in the FM5 diet. Shrimp protein hydrolysate was produced from fresh cephalothorax of farmed white shrimp (*Litopenaeus vannamei*) by Diana Aqua. Briefly, after grinding (10mm) of shrimp head, hydrolysis was run in a closed reactor after addition of an exogenous protease. At the end of the hydrolysis process, the enzyme was then inactivated and the liquid hydrolysate pasteurized at 95°C for 30min. At the end of the hydrolysis process, solid wastes (shell) were separated using centrifugation and the liquid fraction was spray-dried to reach the following specifications: dry matter 95%, crude protein: 68.2%, crude fat: 8.6%, ash: 12.2%, soluble protein: 92% of total protein. All the diets were formulated by Diana Aqua (Symrise group, Elven, France) and the manufacturing was contracted to a technical center. Raw materials were ground at 1mm then extruded according to the following parameters through a twinscrew extruder: water addition: 24%, screw speed 350rpm, temperature extrusion 125°C, temperature die plate 110°C; dryer 115°C. Konjac powder was added at 1% of the diet for all the dietary treatments to get more cohesive feces and to get their collection more accurate. All the diets were balanced for deficient amino acids according to the requirements determined for European seabass. All the diets were isoproteic (45.5 $\pm$ 0.2% crude protein), isolipidic (15.7 $\pm$ 0.4% crude fat) and isoenergetic (5.0 $\pm$ 0.0 Kcal/kg).

Table 3: Formulation and proximate composition of the experimental diets

| Raw materials | FM20 | FM5 | FM5 + 1% SH | FM5 + 5% SH | FM5 + 10% SH |
|---|---|---|---|---|---|
| FM prime (67% CP) | 9.7 | 0.0 | 0.0 | 0.0 | 0.0 |
| FM standard (65% CP) | 10.3 | 5.0 | 5.0 | 5.0 | 5.0 |
| Shrimp hydrolysate | 0.0 | 0.0 | 1.0 | 5.0 | 10.0 |
| Corn Gluten | 11.5 | 16.6 | 16.0 | 15.2 | 14.1 |
| Wheat Gluten | 14.5 | 21.0 | 20.2 | 19.1 | 17.8 |
| Rapeseed | 9.5 | 10.5 | 10.1 | 9.6 | 9.0 |
| Soya Cake | 12.7 | 15.0 | 14.4 | 13.7 | 12.8 |
| Wheat dehulled | 12.2 | 9.7 | 11.4 | 11.0 | 10.4 |
| MET | 0.4 | 0.5 | 0.5 | 0.5 | 0.5 |
| LYS | 1.0 | 1.6 | 1.5 | 1.5 | 1.4 |
| MCP | 1.7 | 2.6 | 2.5 | 2.4 | 2.2 |
| Fish oil | 14.6 | 15.3 | 15.2 | 15.0 | 14.7 |

(continued)

| Raw materials | FM20 | FM5 | FM5 + 1% SH | FM5 + 5% SH | FM5 + 10% SH |
|---|---|---|---|---|---|
| Premix | 1.1 | 1.1 | 1.1 | 1.1 | 1.1 |
| Konjac meal | 1.0 | 1.0 | 1.0 | 1.0 | 1.0 |
| **Proximate composition[1]** | | | | | |
| Dry matter (%) | 91.9 | 91.3 | 91.8 | 91.2 | 90.6 |
| Crude protein(%) | 45.7 | 45.2 | 45.3 | 45.7 | 45.5 |
| Crude fat (%) | 15.5 | 15.3 | 15.6 | 15.5 | 16.5 |
| Ash (%) | 6.6 | 6.3 | 6.3 | 6.5 | 6.5 |
| Energy (Kcal/g) | 5.1 | 5.0 | 5.0 | 5.0 | 4.9 |

[1]Analysis done by Up Sciences laboratory (Saint Nolff, France): Dry matter (EU N°152/2009, Dessication 103°C, 4 hours), crude protein (ISO 16634-1, Dumas method), fat (EU N°152/2009, solvant extraction after acid hydrolysis), ash (Incineration 550°C, 8 hours), energy (EU N°152/2009)

*1.2. Animals and feeding trial*

The trial was conducted in European seabass during 46 days in the experimental flow-through facilities of IFREMER (Center in Brest, France). Seawater (salinity: 35g/l) was filtered (high pressure sand filter) and thermoregulated (water temperature: 20 ± 1°C). Triplicate groups of 40 European seabass juveniles (initial mean body weight: 10.3 ±0.0 g), coming from Aquastream farm (Ploemeur, France), were reared in 15 tanks of 80 L capacity (flow rate: 3l/min; photoperiod: 12 h light: 12 h dark; light on at 2:00 am, light off at 2:00 pm). Three tanks were allotted at random to each diet. Fish were fed with automatic feeder (Arvotec, Finland) at a feed ration of 3% of the biomass per day. Daily feeding rate adjustments were piloted by the feeder software with a food conversion ratio established at 1.0 during all the trial. The trial took place in two steps. Firstly, fish were conditioned with the different diets during 32 days. Fish were then fed one time a day (3:00 am) for 60 min. Secondly, the release of feces by fish was monitored during 2 periods of 5 days. Feces were collected during 15 hours post-feeding, (siever placed under the water outlet), pooled, weighed, frozen (one bucket per tank) then dried (105°C, 24h) at the end of the trial for calculation of the relative amount of feces emission. During handling and weighing, fish were anesthetized with 50 mg/L of MS-222 (Sigma Aldrich, Saint-Louis, MO, USA). At the end of the trial, fish were euthanized with an overdose of MS-222 (100 mg/mL).

1.3. In vitro *myotropic assay*

European seabass were purchased from Aquastream farm (Ploemeur, France) and maintained in 300 L raceways tanks at 15±1°C at the Marine Station of Luc-sur-Mer (University of Caen-Normandy, France) (Sand filtered seawater; flow rate: 5l/min; natural photoperiod). Fish were fed a 3mm commercial feed (BN-nature pre-grower, Le Gouessant, Lamballe, France) according to feeding table. Fish were fasted for 24 hours prior to tissue sampling. The day of sampling, fish were euthanized with an overdose of MS-222 (100 mg/mL) and the anterior section of intestine immediately sampled to run myotropic assays. Each organ was suspended on a dynamometer (UF1 force sensor, LCM Systems, Newport, Isle of Wight, United Kingdom) in a 5ml muscle chamber, with a nylon thread (0.12-mm diameter) calibrated initially at a tension of 1V. The signal was transmitted by an amplifier (TB4M, World Precision Instrument, Sarasota, Finland) and contractions were displayed on a printer L200E (Linseis, Trenton, NJ, USA) or with a homemade digital voltmeter based on Arduino technology (https://www.arduino.cc) coupled to the Qt application programming interface (https://www.qt.io). The muscle chamber was perfused at a flow rate of 0.5 mL.min-1 with a 340mOsm perfusion solution (1mM glucose, Sigma Aldrich; 9.945g.$L^{-1}$ salt for artificial sea water, Instant Ocean - Aquarium system, Sarrebourg, France) and maintained at 18°C.

In a first step, whole protein hydrolysates from different origins (krill, shrimp, tuna, white fish, salmon and squid) were injected on a first set of freshly isolated intestines to compare their myotropic activities. In a second step, HPLC fractions of shrimp hydrolysate and synthetic peptide were injected on a second set of freshly isolated intestines. In both steps, whole hydrolysates or fractions or synthetic peptide were injected in the perfusing flow using a three-ways valve to avoid mechanical stress. Each analysis was performed at least in triplicate.

*1.4. Ethics statements*

The present work was performed in accordance with French and European policies and the guidelines of the French Animal Care Committee (Agreement number: APAFIS#3087) and the regional ethical committee (Comité d'Ethique Normandie en Matière d'Experimentation Animale, CENOMEXA; agreement number 54).

*1.5. Peptide extraction from shrimp hydrolysate*

One gram of shrimp hydrolysate was diluted in 10 ml of 0.1% HPLC-grade trifluoroacetic acid (TFA - Sigma-ALdrich, Saint-Louis, Missouri, USA) solution over night at 4°C and centrifuged 10 min at 20,000 × g. The supernatant was Whatman-paper filtered and diluted at 1 absorbance unit (AU) at a wavelength of 214 nm in 0.1% TFA solution. Diluted extract was concentrated on a Sep-Pak C18ec classic cartridge (Waters, Milford, Massachusetts, USA), eluted by water/acetronitrile/TFA (89.9/10/0.1, v/v/v), evaporated on a speedVac concentrator and kept at 4°C until use. HPLC-grade acetronitrile (ACN) was purchased from Sigma-Aldrich (Saint-Louis, Missouri, USA).

*1.6. rpHPLC*

Reverse phase high performance liquid chromatography (rpHPLC) separation was performed on a UFLC Shimadzu system composed by a pump LC-202A, a degassing unit DGU-20A3R, a hoven CTO-10ASVP, a communication bus CBM-20A, a UV-VIS spectrometer detector SPD-20A and a fraction collector FRC-10A (Shimadzu, Kyoto, Japan). Elution was carried out on an EC 250/4 Nucleodur 100-10 C18-ec column (ref 760003.40, Macherey-Nagel, Hoerdt, France) with ACN/water/TFA (80/19.9/0.1, v/v/v) at a flow rate of 1 ml/min. Gradient of ACN was performed from 10% to 17% in 14 minutes for the first separation step and from 0% to 8% in 55 minutes for the second separation step. All the fractions were collected for the duration of the ACN gradient and then evaporated on a speedvac concentrator and kept at 4°C until use. Dried peptide extract and fractions were dissolved in 600 μl of 0.1% TFA solution and 50 μl were injected.

*1.7. rpHPLC-ESI-Q3 MS*

Reverse phase high performance liquid chromatography coupled with electrospray mass spectrometry (rpHPLC-ESI-Q3 MS) was performed at the PRISM platform (Centre de Lutte Contre le Cancer François Baclesse, Caen, Lower Normandy, France). Analysis were carried out on UHPLC Nexera X2 system consisting of two binary pumps with an auto-sampler and a column oven (Shimadzu, Kyoto, Japan). The UHPLC system was interfaced with an electrospray interface to a triple quadrupole mass spectrometer (LCMS 8030Plus; Shimadzu). Elution was carried out on an EC 250/2 Nucleodur C18 Gravity, 5μm column (ref 760101.20, Macherey-Nagel) with ACN/water/TFA (80/19.9/0.1, v/v/v) solution at a flow rate of 0.5 ml/min. Gradient of acetonitrile was performed from 0 to 20% in 20 minutes. Dried fractions were dissolved in 500 μl of 0.1% TFA solution and 50 μl were injected. Fragmentation energy used were -15 and -35eV.

*1.8. EDMAN degradation*

Peptide sequence had been determined using a Procise Protein Sequencing System Model 494 (Thermo Fisher Scientific, Waltham, Massachusetts, USA) coupled to a PTH Model 140 amino acid analyzer (Perkin Elmer - Applied Biosystems, Foster City, California, USA) with routine protocol.

*1.9. Peptide identification.*

Sequence of peptide obtained from Edman degradation was confirmed comparing the fragmentation profile based on the occurrence of y, b and a ions from the rpHPLC-ESI-Q3 $MS^2$ and the theoretical fragmentation table of KNPEQ using Protein Prospector (http://prospector.ucsf.edu/prospector/cgi-bin/msform.cgi?form=msproduct). Then *in silico* analysis was conducted to identify KNPEQ. Peptraq software [9] was used to search KNPEQ pattern in an annotated *Litopenaeus vannamei* transcriptomic database corresponding to animal origin of the hydrolysate used [8].

*1.10. Statistical analysis*

Data of growth rate and feces release were analyzed by one-way analysis of variance (ANOVA) followed by Tukey's test. Differences between treatments were considered significant at $p \leq 0.05$.

## 2. Results

*2.1. In vitro analysis of myotropic activities of protein hydrolysate on isolated perfused intestine*

Results are illustrated in Figure 1, which shows that protein hydrolysate of crustacean origin (krill and shrimp) had the highest myotropic activity, followed by fish hydrolysate (tuna, white fish and salmon). In the opposite, squid hydrolysate rather showed a relaxing activity. Based on these results, shrimp hydrolysate was selected for testing its myotropic activity during an *in vivo* trial in European seabass. Shrimp hydrolysate was also separated in different peptidic fractions in order to identify the peptide(s) responsible for the myotropic activity.

2.2 In vivo *feeding trial*

Results of feeding trial are illustrated by the **Figure 2A.** Specific growth rate (SGR) was significantly increased, both by the level of FM (FM5 vs FM20) and the level of SH included in FM5 (TMC $p \leq 0.05$). Fish fed FM5 + 10% SH diet showed the highest growth performance. Supplementation of 5% SH in the FM5 diet allowed reaching a similar growth performance than the positive control (FM20). A supplementation with 1% of shrimp hydrolysate (FM5 + 1% SH) did not improve significantly the fish growth rate compared to the negative control (FM5).

The kinetics of feces release were monitored from 7 to 15 hours (corresponding to the peak of feces release) after feeding for all dietary treatments (**Figure 2B**). No significant difference was observed in moisture content of feces with fvalue ranging from 85.6±1.0 % in fish fed diet FM20 to 87.5±0.4% in fish fed FM5 + 10% SH diet. No significant difference was observed between negative (FM5) and positive controls (FM20) ($p>0.05$). Seven hours post-feeding, feces release started to be higher in fish fed of the diets including shrimp hydrolysate at 5% and 10% but the difference was not statistically different. Nine hours post-feeding, a significant difference was observed between the diet containing the highest amount of shrimp hydrolysate (FM5 + 10% SH) and the negative (FM5) control ($p\leq 0.05$). Then no significant difference was observed anymore at the end of the feces collection, even if feces release tended to be lower in fish fed 5% and 10% shrimp hydrolysate.

Table 4: Zootechnical performances of fish fed the dietary treatments for 46 days

| Diets | Total feed intake (g) | SGR (%) | Feed conversion ratio |
|---|---|---|---|
| FM20 | 620.6 ± 31.8$^{8b}$ | 1.84 ± 0.02$^{b}$ | 1.15 ± 0.04$^{ab}$ |
| FM5 | 543.7 ± 41.5$^{bc}$ | 1.65 ± 0.09$^{c}$ | 1.28 ± 0.09$^{bc}$ |
| FM5 + 1% SH | 572.4 ± 36.9$^{b}$ | 1.69 ± 0.05$^{c}$ | 1.23 ± 0.08$^{b}$ |
| FM5 + 5% SH | 640.2 ± 18.4$^{a}$ | 1.83 ± 0.03$^{b}$ | 1.12 ± 0.02$^{a}$ |
| FM5 + 10% SH | 674.6 ± 2.3$^{a}$ | 1.93 ± 0.01$^{a}$ | 1.07 ± 0.00$^{a}$ |

Values are mean of triplicate groups and presented as mean±SD. Values with different superscripts in the same row are significantly different ($P\leq 0.05$).

*2.3. Peptide purification from shrimp hydrolysate*

First, myotropic properties of the whole shrimp hydrolysate had been investigated. For that purpose, unpurified shrimp hydrolysate was tested on *in vitro* perfused intestine of sea bass. Shrimp hydrolysate induced the contraction of the intestine (**Figure 3A**). The myotropic peptide purification required 2 successive rpHPLC separation steps. The second RP-HPLC step chromatogram is presented in **Figure 3B.** Interestingly, the active fraction (fraction 12) was one of the most hydrophobic collected peaks but it was not the main one. The injection of the purified fraction 12 in perfused intestine of sea bass induced an increase of the tonus very quickly followed by the induction of a cyclic contraction of the intestine during at least 12 hours (corresponding to the end of the acquisition time) (**figure 3C**).

*2.4. Peptide identification from shrimp hydrolysate*

The fraction 12 mentioned above has been analyzed by Edman degradation. The main component was a penta-peptide and the putative sequence was Gly/Lys-Asn-Pro-Glu-Gln. Fraction 12 has also been analyzed by nLC-ESI-MS/MS. The mass of the main component was 615 Da. The fragmentation spectrum of the main component of the fraction 12 is presented **Figure 4A.** By comparing the theoretical fragmentation peak list of Gly/Lys-Asn-Pro-Glu-Gln we confirmed that Lys-Asn-Pro-Glu-Gln (KNPEQ) was the primary sequence (SEQ ID No. 1). KNPEQ pattern had been search a *Litopenaeus vannamei* protein home-made data base with a home-made software (peptraq). Only one protein had the KNPEQ pattern and it was annotated as hemocyanin. The corresponding protein is identical to L. *vannamei* hemocyanin CAA57880.1 (Genbank). The position of KNPEQ is presented as **Figure 4B.** Alignment of hemocyanin from *L.vannamei* and 5 species is presented **Figure 4C.** Hemocyanin is a conserved protein among some *Arthropoda* and *Mollusca* but the KNPEQ pattern was only observed into the hemocyanin C chain from the lobster, *Panulirus interruptus* and *L. vannamei.*

*2.5 Contractile activity of the synthetic KNPEQ peptide*

Contractible activity of the synthetized KNPEQ peptide on *in vitro* perfused sea bass intestine has been investigated. Increasing doses: 1, 10 and 100 μM of KNPEQ had been successively injected on the same intestine, waiting between injections that the intestine returns to a normal contraction pattern. At 1 μM, KNPEQ induced a sharp contraction and a slight increase of the intestine tonus during 10 min (**Figure 5A**). At 10 μM KNPEQ induced still a new sharp contraction and slight tonus increase of the intestine but during 16 min **(Figure 5B).** At 100 μm, the effect of KNPEQ on intestine was very different. We observed after the injection, a slight increase of the tonus but a prolonged one for the amplitude of contraction (**Figure 5C**). This effect had been monitored during 10 hours.

*2.6 Additional comments*

Association of different analytical methods: separation, mass spectrometry, Edman sequencing, *in vitro* assay based on fish gut electrophysiology, and bioinformatic tools allowed the Inventors purifying and identifying a peptide fraction of a protein hydrolysate manufactured from head of white shimp, *L. vannamei* and responsible for a myotropic activity on fish intestine.

As shown herein, the Inventors indeed demonstrated that shrimp protein hydrolysate contained a peptide (KNPEQ) showing, *in vitro,* a myotropic activity on European seabass intestine. *In vivo,* dietary shrimp hydrolysate stimulated feces release kinetics by accelerating the gastrointestinal feed transit time of the fish, while improving fish growth performance. These results confirmed the high potential of shrimp protein hydrolysate to support the development of innovative and sustainable aquaculture feeds.

**REFERENCES**

[1] S. Holmgren, C. Olsson, Chapter 10 The Neuronal and Endocrine Regulation of Gut Function, 1st ed., Elsevier Inc., 2009. doi:10.1016/S1546-5098(09)28010-1.

[2] S. Adamidou, I. Nengas, M. Alexis, E. Foundoulaki, D. Nikolopoulou, P. Campbell, I. Karacostas, G. Rigos, G.J. Bell, K. Jauncey, Apparent nutrient digestibility and gastrointestinal evacuation time in European seabass (Dicentrarchus labrax) fed diets containing different levels of legumes, Aquaculture. 289 (2009) 106-112. doi:10.1016/j.aquaculture.2009.01.015.

[3] T. Storebakken, I.S. Kvien, K.D. Shearer, B. Grisdale-Helland, S.J. Helland, Estimation of gastrointestinal evacuation rate in atlantic salmon (Salmo salar) using inert markers and collection of faeces by sieving: Evacuation of diets with fish meal, soybean meal or bacterial meal, Aquaculture. 172 (1999) 291-299. doi:10.1016/S0044-8486(98)00501-8.

[4] G. Francis, H.P.S. Makkar, K. Becker, Antinutritional factors present in plant-derived alternate fish feed ingredients and their effects in fish, Aquaculture. 199 (2001) 197-227. doi:10.1016/S0044-8486(01)00526-9.

[5] F. Médale, S. Kaushik, Les sources protéiques dans les aliments pour les poissons d'élevage, Cah. Agric. 18 (2009) 103-111. doi:10.1684/agr.2009.0279.

[6] S. Refstie, J.J. Olli, H. Standal, Feed intake, growth, and protein utilisation by post-smolt Atlantic salmon (Salmo salar) in response to graded levels of fish protein hydrolysate in the diet, Aquaculture. 239 (2004) 331-349. doi:10.1016/j.aquaculture.2004.06.015.

[7] S. Khosravi, S. Rahimnejad, M. Herault, V. Fournier, C.-R. Lee, H.T. Dio Bui, J.-B. Jeong, K.-J. Lee, Effects of protein hydrolysates supplementation in low fish meal diets on growth performance, innate immunity and disease resistance of red sea bream Pagrus major, Fish Shellfish Immunol. 45 (2015) 858-868. doi:10.1016/j.fsi.2015.05.039.

[8] M. Robert, C. Zatylny-Gaudin, V. Fournier, E. Corre, G. Le Corguillé, B. Bernay, J. Henry, Transcriptomic and peptidomic analysis of protein hydrolysates from the white shrimp (L. vannamei), J. Biotechnol. 186 (2014) 30-37. doi:10.1016/j.jbiotec.2014.06.020.

[9] C. Zatylny-Gaudin, V. Cornet, A. Leduc, B. Zanuttini, E. Corre, G. Le Corguillé, B. Bernay, J. Garderes, A. Kraut, Y. Couté, J. Henry, Neuropeptidome of the Cephalopod Sepia officinalis: Identification, Tissue Mapping, and Expression Pattern of Neuropeptides and Neurohormones during Egg Laying, J. Proteome Res. 15 (2016) 48-67. doi:10.1021/acs.jproteome.5b00463.

## Claims

1. A peptide of sequence KNPEQ (SEQ ID No. 1) or a functional peptidic variant thereof.

2. A protein hydrolysate comprising the peptide or variant according to claim 1.

3. The protein hydrolysate according to claim 2, which comprises said peptide or variant as a free peptide.

4. The protein hydrolysate according to claim 2 or 3, which is a crustacean protein hydrolysate, preferably a crustacean protein hydrolysate selected from the group consisting of krill protein hydrolysates, shrimp protein hydrolysates, crab protein hydrolysates, and combinations thereof.

5. The peptide or variant according to claim 1 or the protein hydrolysate according to any one of claims 2 to 4, for use as a myotropic compound.

6. The peptide or variant according to claim 1 or the protein hydrolysate according to any one of claims 2 to 4, for use in a method for improving digestive comfort and/or balance in a subject.

7. The peptide or variant according to claim 1 or the protein hydrolysate according to any one of claims 2 to 4, for use in a method for accelerating feed transit in a subject.

8. The peptide or variant or the protein hydrolysate for use according to claim 6 or 7, wherein said subject is an animal.

9. The peptide or variant or the protein hydrolysate for use according to claim 8, wherein said animal is a fish.

10. An edible composition comprising the peptide or variant according to claim 1 or the protein hydrolysate according to any one of claims 2 to 4.

11. The edible composition according to claim 10, which is an animal feed or an animal feed ingredient.

12. The edible composition according to claim 11, further comprising one or more additional animal feed ingredients.

**13.** The edible composition according to claim 11 or 12 for use in a method for feeding animal.

**14.** The edible composition according to claim 11 or 12, or the edible composition for use according to claim 13, wherein said animal is a fish.

**15.** A method for preparing a fish feed, comprising the step of adding the edible composition according to claim 14 to a fish feed formulation.

**16.** The method according to claim 15, wherein said fish feed is a fish feed pellet.

**17.** The method according to claim 15 or 16, wherein said edible composition is added to said fish feed formulation by inclusion and/or by top-coating.

**18.** The method according to any one of claims 15 to 17, wherein said edible composition is added in an amount ranging from 0.3% to 10% by weight of said fish feed, preferably in an amount ranging from 1% to 5% by weight of said fish feed.

**19.** A kit comprising, in one or more containers in a single package:

- at least one peptide or variant according to claim 1, and/or at least one protein hydrolysate according to any one of claims 2 to 4, and/or at least one edible composition according to any one of claims 10 to 12; and
- optionally, at least one animal feed ingredient, such as at least one fish feed ingredient.

**20.** The peptide or variant or the protein hydrolysate for use according to claim 9, or the edible composition according to claim 14, or the edible composition for use according to claim 14, or the method according to any one of claims 5 to 8, or the kit according to claim 19, wherein said fish is a carnivorous fish.

Fig. 1

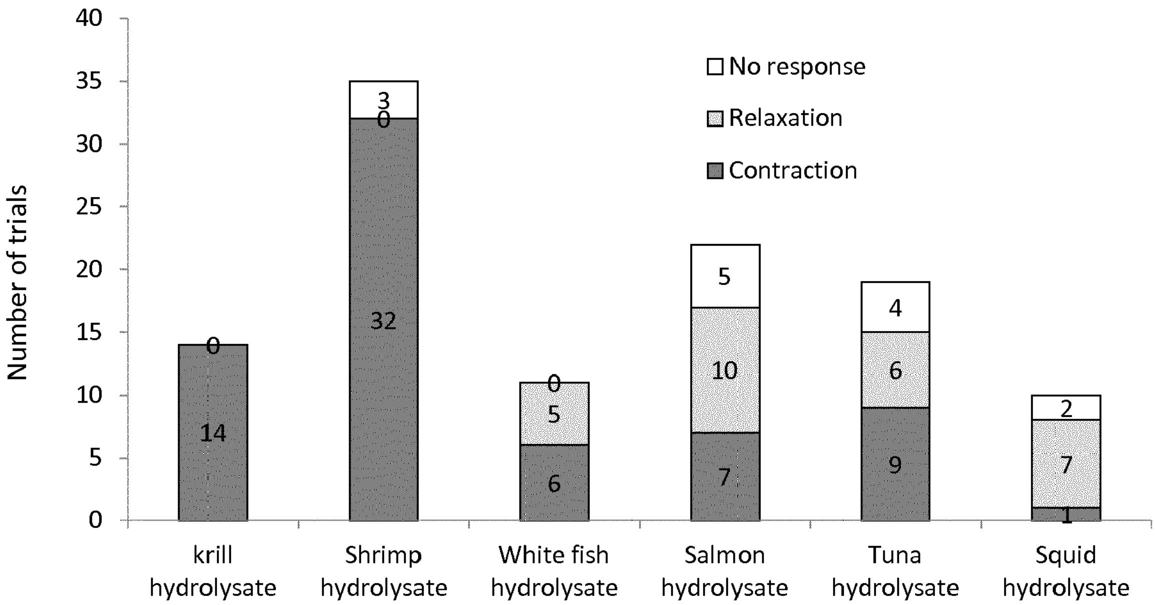
40
35
30
25
20
15
10
5
0
Number of trials
No response
Relaxation
Contraction
3
0
32
0
14
0
5
6
5
10
7
4
6
9
2
7
1
krill hydrolysate
Shrimp hydrolysate
White fish hydrolysate
Salmon hydrolysate
Tuna hydrolysate
Squid hydrolysate

Fig. 2

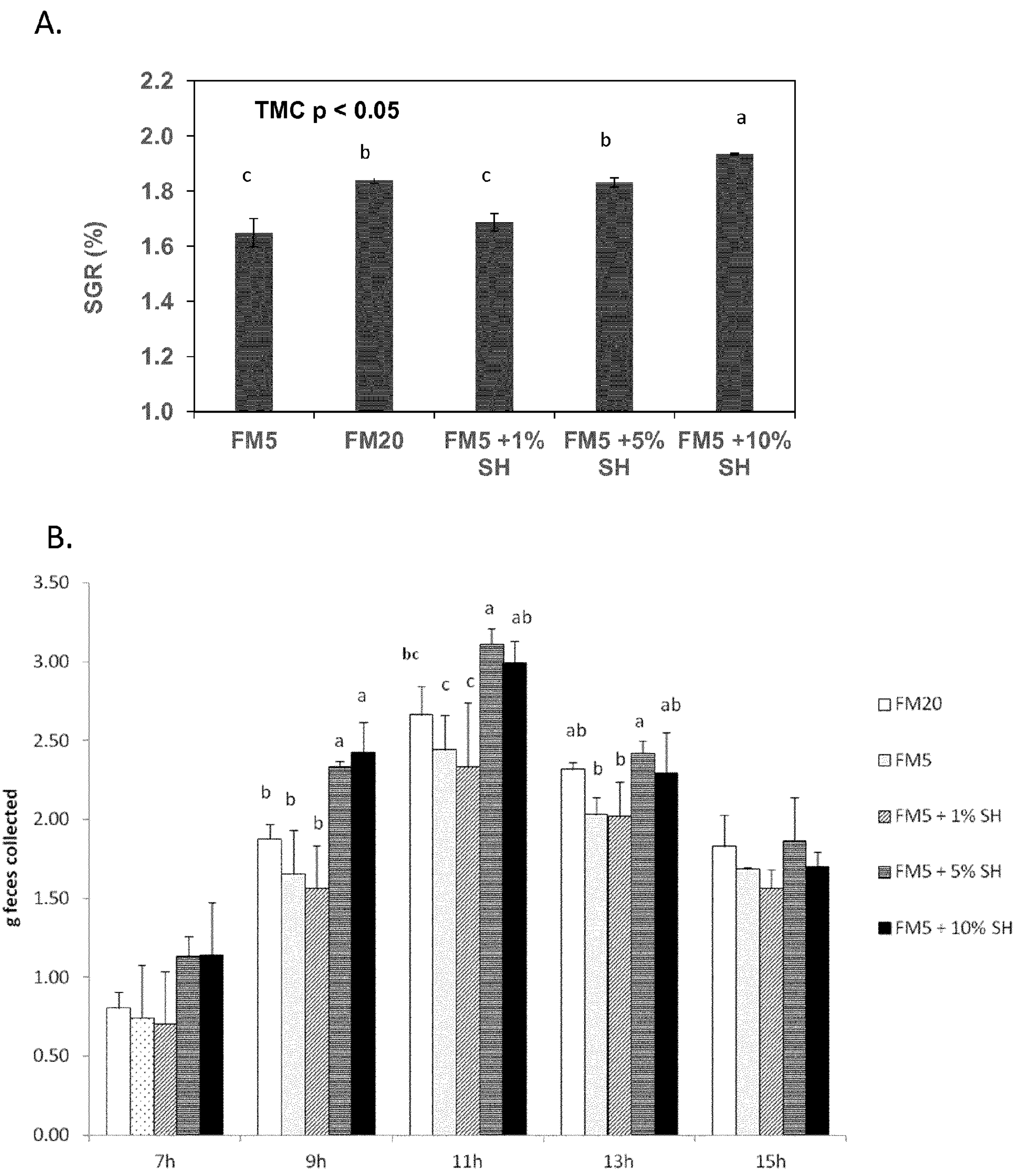
A.
2.2
2.0
1.8
1.6
1.4
1.2
1.0
SGR (%)
TMC p < 0.05
c
b
c
b
a
FM5
FM20
FM5 +1% SH
FM5 +5% SH
FM5 +10% SH
B.
3.50
3.00
2.50
2.00
1.50
1.00
0.50
0.00
g feces collected
7h
9h
11h
13h
15h
FM20
FM5
FM5 + 1% SH
FM5 + 5% SH
FM5 + 10% SH

Fig 2 (continued)

C.

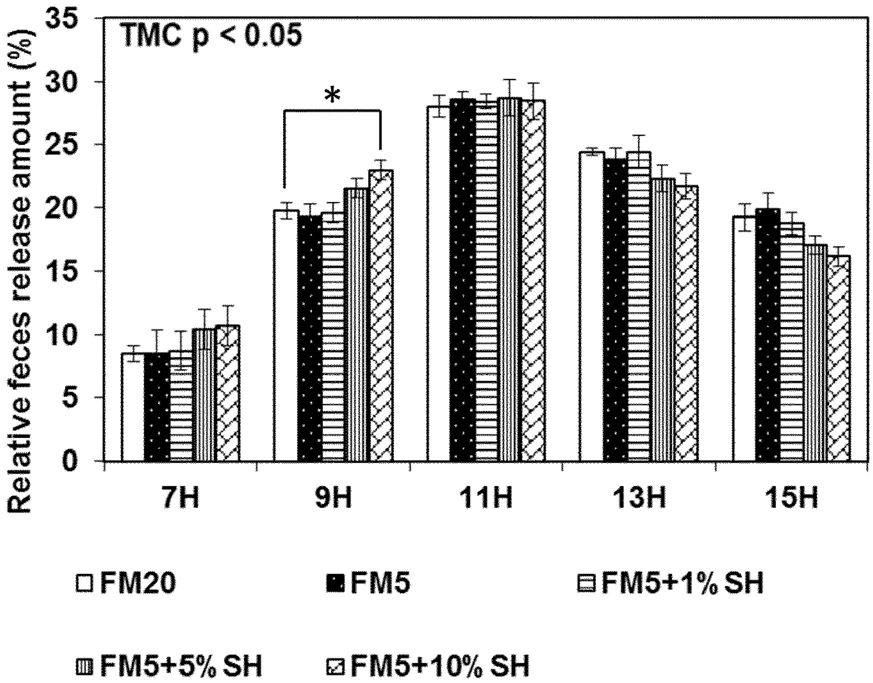

Fig 3

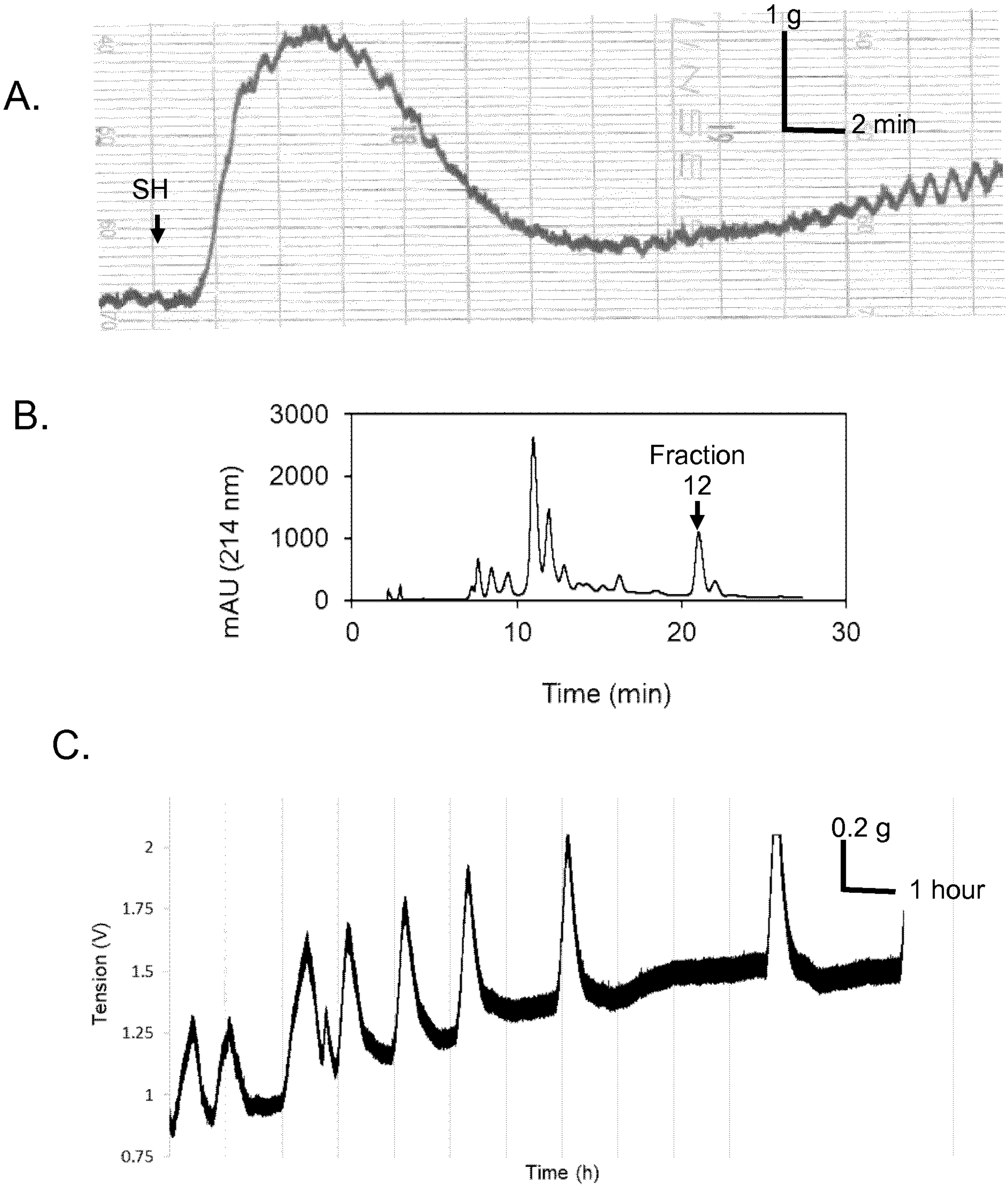
A.
1 g
2 min
SH
B.
3000
2000
1000
0
mAU (214 nm)
Fraction
12
0
10
20
30
Time (min)
C.
2
1.75
1.5
1.25
1
0.75
Tension (V)
0.2 g
1 hour
Time (h)

Fig. 4A

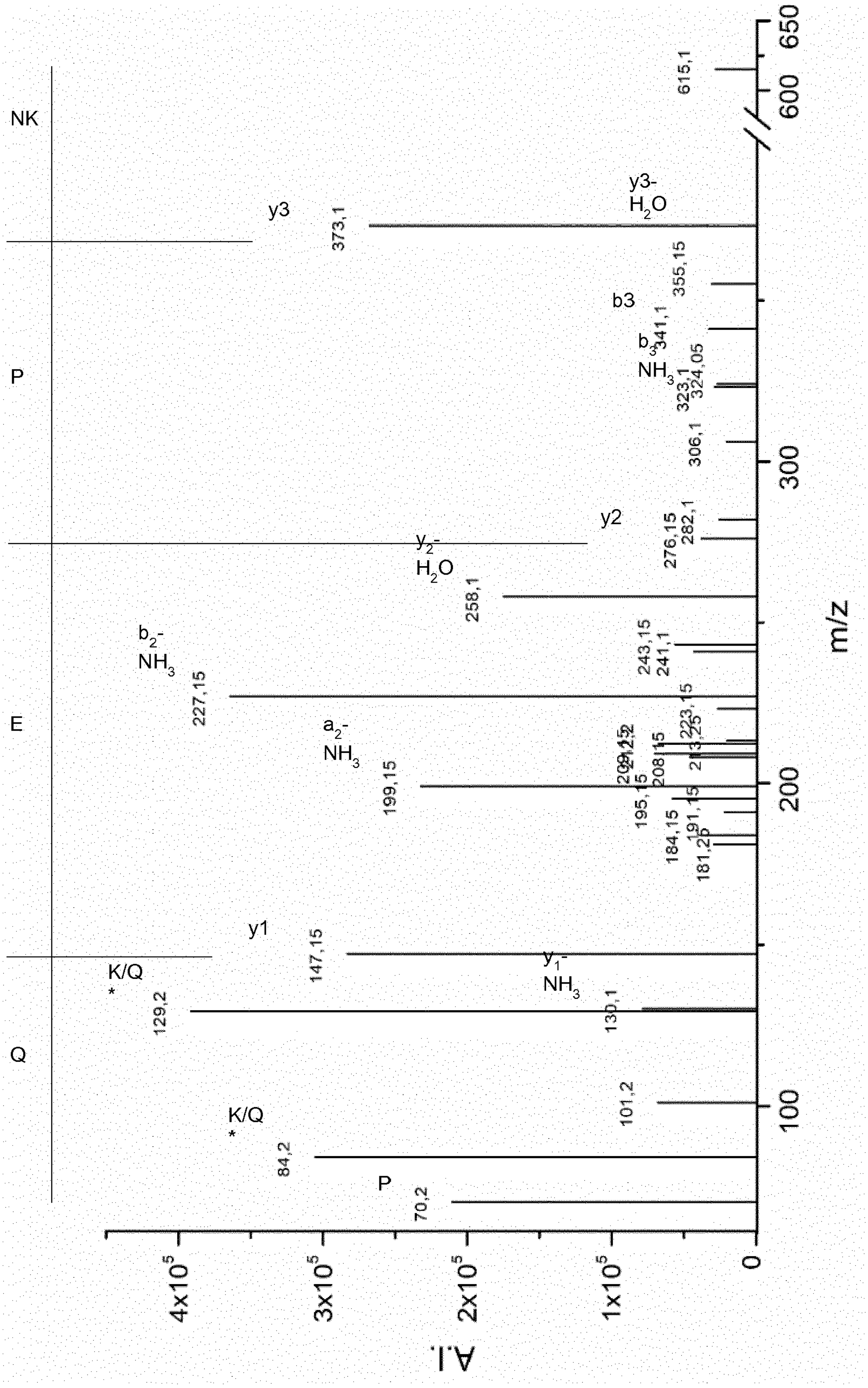
NK
P
E
Q
y3
y3-H2O
373,1
615,1
355,15
b3
341,1
b3-NH3
324,05
323,1
306,1
y2
282,1
276,15
y2-H2O
258,1
243,15
241,1
b2-NH3
227,15
223,15
a2-NH3
199,15
195,15
191,15
184,15
181,25
y1
147,15
K/Q *
129,2
y1-NH3
130,1
101,2
K/Q *
84,2
P
70,2
m/z
A.I.
0
1x10^5
2x10^5
3x10^5
4x10^5
100
200
300
600
650

Fig. 4 (continued)

B.

**Hemocyanin from *L.vannamei***

M R V L V V L G L V A A A A F Q V A S A D V Q Q Q K D V L Y L L N K I Y G D I Q D G D L L A T A N S F D P V G N L G S Y
S D G G A A V Q K L V Q D L N D G K L L E Q K H W F S L F N T R H R N E A L M L F D V L I H C K D W A S F V G N A A Y F
R Q K M N E G E F V Y A L Y V A V I H S S L A E Q V V L P P L Y E V T P H L F T N S E V I E E A Y R A K Q K Q T P G K F
K S S F T G T K **K N P E Q** R V A Y F G E D L A L N T H H V T W H M E F P F W W N D A Y G H H L D R K G E N F F W I H H Q
L T V R F D A E R L S N Y L D P V G E L Q W N K P I V D G F A P H T T Y K Y G G Q F P A R P D N V K F E D V D D V A R I
R D M V I V E S R I R D A I A H G Y I V D S E G K H I D I S N E K G I D I L G D I I E S S L Y S P N V Q Y Y G A L H N T
A H I V L G R Q G D P H G K F D L P P G V L E H F E T A T R D P S F F R L H K Y M D N I F K E H K D N L P P Y T K A D L
E F S G V S V T E L A V V G E L E T Y F E D F E Y S L I N A V D D A E G I P D V E I S T Y V P R L N H K E F T F R I D V
E N G G A E R L A T V R I F A W P H K D N N G I E Y T F D E G R W N A I E L D K F W V S L K G G K T S I E R K S T E S S
V T V P D V P S I H D L F A E A E A G G A G L A K F E S A T G L P N R F L L P K G N D R G L E F D L V V A V T D G D A D
S A V P N L H E N T E Y N H Y G S H G V Y P D K R P H G Y P L D R K V P D E R V F E D L P N F K H I Q V K V F N H G E H
I H

Signal peptide | Hemocyanin N domain | Hemocyanin M domain | Hemocyanin C domain

C.

| | |
|---|---|
| Lp-Hemocyanin | GKFKSSFTGTKKNPEQRVAYFGEDIGLNTHHVTWHMEFPFWWNDA- |
| Ca-Hemocyanin subunit 2 | TKIFAHFTGSKSNPEQRVAYFGEDIGMNTHHVTWHLEFPFWWDDAH |
| Al-Hemocyanin B chain | GRFNMDFTGTKKNKEQRVAYFGEDIGMNIHHVTWHMDFPFWWKDS- |
| Pv-Hemocyanin | GTFNMSFTGTQKNREQRVAYFGQDIGMNIHHVTWHMDFPFWWDDS- |
| Ha-Pseudohemocyanin-1 | GKFNMNFTGTQNNPEHKIAYFGEDIGLSTHYINWHIEYPFWWNET- |
| Ha-Pseudohemocyanin-2 | GRFNMNFTGTQNNPEHKIAYFGEDIGLSTHYINWHIEYPFWWNET- |
| Pi-Hemocyanin A chain | GTFNVSFTGTKKNREQRVAYFGEDIGMNIHHVTWHMDFPFWWEDS- |
| Pi-Hemocyanin B chain | GTFNVSFTGTKKNREQRVAYFGEDIGMNIHHVTWHMDFPTWWQDS- |
| Pi-Hemocyanin C chain | SKFESHFTGSKKNPEQHVAYFGEDVGMNTHHVLWHMEFPFWWEDS- |

Sequence logo
4,3bits
0,0bits
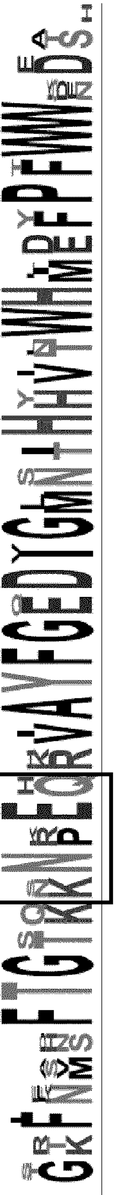

Fig. 5

A.

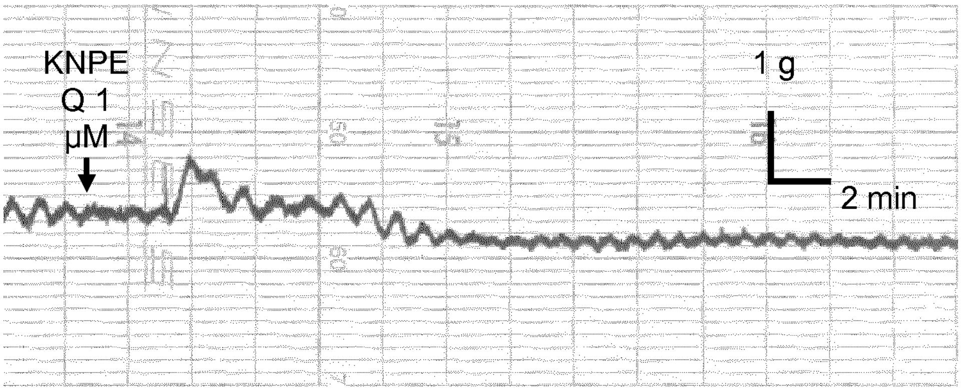
KNPEQ 1 μM
1 g
2 min

B.

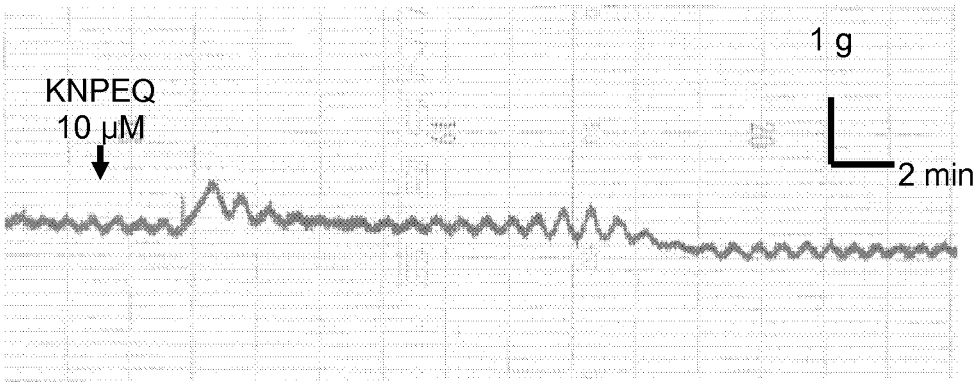
KNPEQ 10 μM
1 g
2 min

C.

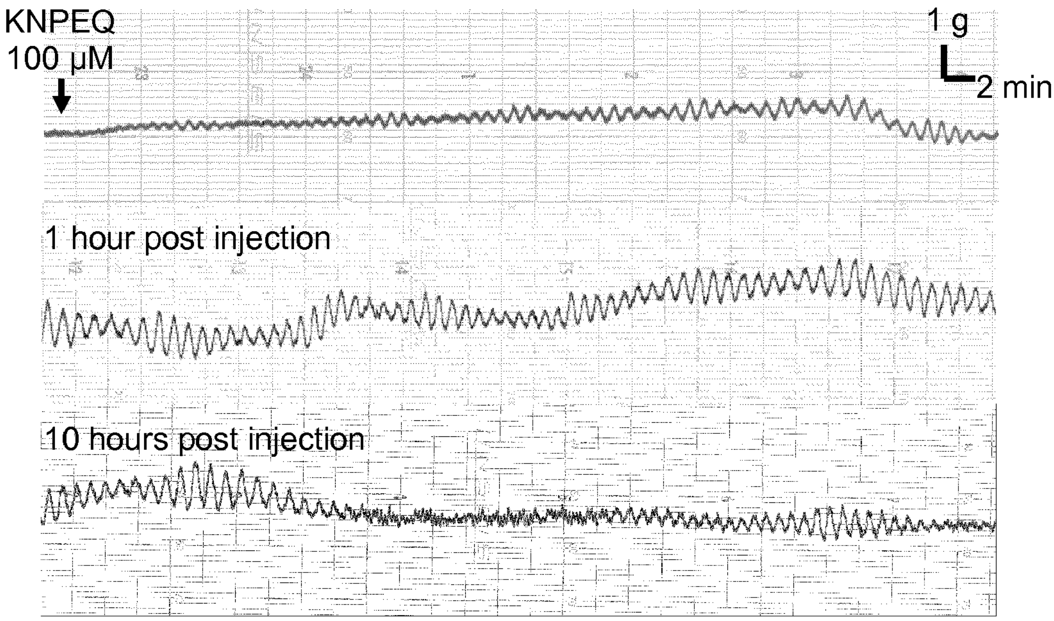
KNPEQ 100 μM
1 g
2 min
1 hour post injection
10 hours post injection

Europäisches Patentamt
European Patent Office
Office européen des brevets

# EUROPEAN SEARCH REPORT

Application Number
EP 18 30 5882

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/200910 A2 (IOGENETICS LLC [US]) 18 December 2014 (2014-12-18)<br>* sequence 10138 *<br>----- | 1,10-12, 19 | INV.<br>A23K50/80<br>A23K50/40<br>A23K10/14<br>A23K10/26<br>A23K20/147<br>A23J1/04<br>A23J3/34 |
| X | ROBERT MARIE ET AL: "Transcriptomic and peptidomic analysis of protein hydrolysates from the white shrimp (L. vannamei)",<br>JOURNAL OF BIOTECHNOLOGY, ELSEVIER, AMSTERDAM, NL,<br>vol. 186, 3 July 2014 (2014-07-03), pages 30-37, XP029075447,<br>ISSN: 0168-1656, DOI: 10.1016/J.JBIOTEC.2014.06.020<br>* the whole document *<br>----- | 2-20 | |
| A | WO 01/31019 A2 (CHIRON SPA [IT]; GALEOTTI CESIRA [IT]; GRANDI GUIDO [IT]; MASIGNANI VE) 3 May 2001 (2001-05-03)<br>* the whole document *<br>----- | 1 | |
| A | WO 2014/114767 A1 (SPECIALITES PET FOOD [FR]) 31 July 2014 (2014-07-31)<br>* the whole document *<br>----- | 1-20 | TECHNICAL FIELDS SEARCHED (IPC)<br>A23K<br>A23J |
| A | WO 2017/068149 A1 (CYSAL GMBH [DE]) 27 April 2017 (2017-04-27)<br>* the whole document *<br>----- | 1-20 | |
| A | WO 2014/067950 A1 (SPECIALITES PET FOOD [FR]) 8 May 2014 (2014-05-08)<br>* the whole document *<br>----- | 2-20 | |
| | -/-- | | |

The present search report has been drawn up for all claims

2

| Place of search | Date of completion of the search | Examiner |
|---|---|---|
| The Hague | 20 December 2018 | Smalt, Rolf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 18 30 5882

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | A. LEDUC ET AL: "Shrimp by-product hydrolysate induces intestinal myotropic activity in European seabass (Dicentrarchus labrax)", AQUACULTURE, vol. 497, 3 August 2018 (2018-08-03), pages 380-388, XP055534439, Amsterdam, NL ISSN: 0044-8486, DOI: 10.1016/j.aquaculture.2018.08.009 * the whole document * ----- | | |

TECHNICAL FIELDS SEARCHED (IPC)

The present search report has been drawn up for all claims

2

| Place of search | Date of completion of the search | Examiner |
|---|---|---|
| The Hague | 20 December 2018 | Smalt, Rolf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 30 5882

This annex lists the patent family members relating to the patent documents cited in the above-mentioned European search report. The members are as contained in the European Patent Office EDP file on
The European Patent Office is in no way liable for these particulars which are merely given for the purpose of information.

20-12-2018

| Patent document cited in search report | Publication date | Patent family member(s) | Publication date |
|---|---|---|---|
| WO 2014200910 A2 | 18-12-2014 | US 2016132631 A1 | 12-05-2016 |
| | | WO 2014200910 A2 | 18-12-2014 |
| WO 0131019 A2 | 03-05-2001 | AU 784203 B2 | 23-02-2006 |
| | | BR 0015137 A | 25-03-2003 |
| | | CA 2389321 A1 | 03-05-2001 |
| | | CA 2863668 A1 | 03-05-2001 |
| | | CA 2864069 A1 | 03-05-2001 |
| | | CA 2954411 A1 | 03-05-2001 |
| | | CN 1433470 A | 30-07-2003 |
| | | CN 1796404 A | 05-07-2006 |
| | | CN 101613397 A | 30-12-2009 |
| | | DK 1801219 T3 | 07-12-2015 |
| | | DK 2275552 T3 | 07-12-2015 |
| | | DK 2275553 T3 | 03-08-2015 |
| | | EP 1226253 A2 | 31-07-2002 |
| | | EP 1801219 A2 | 27-06-2007 |
| | | EP 2275551 A2 | 19-01-2011 |
| | | EP 2275552 A2 | 19-01-2011 |
| | | EP 2275553 A2 | 19-01-2011 |
| | | EP 2275554 A2 | 19-01-2011 |
| | | EP 2975127 A1 | 20-01-2016 |
| | | ES 2539951 T3 | 07-07-2015 |
| | | ES 2541830 T3 | 27-07-2015 |
| | | ES 2543736 T3 | 21-08-2015 |
| | | ES 2559317 T3 | 11-02-2016 |
| | | ES 2564463 T3 | 22-03-2016 |
| | | HK 1220483 A1 | 05-05-2017 |
| | | JP 2004508801 A | 25-03-2004 |
| | | JP 2011092200 A | 12-05-2011 |
| | | JP 2014068652 A | 21-04-2014 |
| | | JP 2014079248 A | 08-05-2014 |
| | | MX PA02004283 A | 17-10-2002 |
| | | PT 1801219 E | 30-12-2015 |
| | | PT 2275551 E | 29-06-2015 |
| | | PT 2275552 E | 07-12-2015 |
| | | PT 2275553 E | 18-09-2015 |
| | | PT 2275554 E | 26-06-2015 |
| | | RU 2281956 C2 | 20-08-2006 |
| | | US 8734812 B1 | 27-05-2014 |
| | | US 2012219578 A1 | 30-08-2012 |
| | | US 2012276129 A1 | 01-11-2012 |
| | | US 2016051658 A1 | 25-02-2016 |
| | | WO 0131019 A2 | 03-05-2001 |
| WO 2014114767 A1 | 31-07-2014 | AU 2014209844 A1 | 06-08-2015 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 18 30 5882

This annex lists the patent family members relating to the patent documents cited in the above-mentioned European search report. The members are as contained in the European Patent Office EDP file on
The European Patent Office is in no way liable for these particulars which are merely given for the purpose of information.

20-12-2018

| Patent document cited in search report | Publication date | Patent family member(s) | Publication date |
|---|---|---|---|
| | | CA 2898971 A1 | 31-07-2014 |
| | | CL 2015002058 A1 | 28-03-2016 |
| | | EP 2948000 A1 | 02-12-2015 |
| | | ES 2613519 T3 | 24-05-2017 |
| | | WO 2014114767 A1 | 31-07-2014 |
| WO 2017068149 A1 | 27-04-2017 | CN 108347970 A | 31-07-2018 |
| | | EP 3364774 A1 | 29-08-2018 |
| | | US 2018303128 A1 | 25-10-2018 |
| | | WO 2017068149 A1 | 27-04-2017 |
| WO 2014067950 A1 | 08-05-2014 | AU 2013341073 A1 | 07-05-2015 |
| | | CA 2890364 A1 | 08-05-2014 |
| | | CL 2015001134 A1 | 04-03-2016 |
| | | EP 2895006 A1 | 22-07-2015 |
| | | ES 2595050 T3 | 27-12-2016 |
| | | PT 2895006 T | 17-10-2016 |
| | | WO 2014067950 A1 | 08-05-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **S. HOLMGREN ; C. OLSSON.** The Neuronal and Endocrine Regulation of Gut Function. Elsevier Inc, 2009
- **S. ADAMIDOU ; I. NENGAS ; M. ALEXIS ; E. FOUNDOULAKI ; D. NIKOLOPOULOU ; P. CAMPBELL ; I. KARACOSTAS ; G. RIGOS ; G.J. BELL ; K. JAUNCEY.** Apparent nutrient digestibility and gastrointestinal evacuation time in European seabass (Dicentrarchus labrax) fed diets containing different levels of legumes. *Aquaculture,* 2009, vol. 289, 106-112
- **T. STOREBAKKEN ; I.S. KVIEN ; K.D. SHEARER ; B. GRISDALE-HELLAND ; S.J. HELLAND.** Estimation of gastrointestinal evacuation rate in atlantic salmon (Salmo salar) using inert markers and collection of faeces by sieving: Evacuation of diets with fish meal, soybean meal or bacterial meal. *Aquaculture,* 1999, vol. 172, 291-299
- **G. FRANCIS ; H.P.S. MAKKAR ; K. BECKER.** Antinutritional factors present in plant-derived alternate fish feed ingredients and their effects in fish. *Aquaculture,* 2001, vol. 199, 197-227
- **F. MÉDALE ; S. KAUSHIK.** Les sources protéiques dans les aliments pour les poissons d'élevage. *Cah. Agric.,* 2009, vol. 18, 103-111
- **S. REFSTIE ; J.J. OLLI ; H. STANDAL ; FEED INTAKE.** growth, and protein utilisation by post-smolt Atlantic salmon (Salmo salar) in response to graded levels of fish protein hydrolysate in the diet. *Aquaculture,* 2004, vol. 239, 331-349
- **S. KHOSRAVI ; S. RAHIMNEJAD ; M. HERAULT ; V. FOURNIER ; C.-R. LEE ; H.T. DIO BUI ; J.-B. JEONG ; K.-J. LEE.** Effects of protein hydrolysates supplementation in low fish meal diets on growth performance, innate immunity and disease resistance of red sea bream Pagrus major. *Fish Shellfish Immunol.,* 2015, vol. 45, 858-868
- **M. ROBERT ; C. ZATYLNY-GAUDIN ; V. FOURNIER ; E. CORRE ; G. LE CORGUILLÉ ; B. BERNAY ; J. HENRY.** Transcriptomic and peptidomic analysis of protein hydrolysates from the white shrimp. *J. Biotechnol.,* 2014, vol. 186, 30-37
- **C. ZATYLNY-GAUDIN ; V. CORNET ; A. LEDUC ; B. ZANUTTINI ; E. CORRE ; G. LE CORGUILLÉ ; B. BERNAY ; J. GARDERES ; A. KRAUT ; Y. COUTÉ.** Neuropeptidome of the Cephalopod Sepia officinalis: Identification, Tissue Mapping, and Expression Pattern of Neuropeptides and Neurohormones during Egg Laying. *J. Proteome Res.,* 2016, vol. 15, 48-67

SEQUENCE LISTING

```
<110>  SPECIALITES PET FOOD

<120>  MYOTROPIC PEPTIDES AND USES THEREOF

<130>  B74579EPD38502

<160>  1

<170>  PatentIn version 3.5

<210>  1
<211>  5
<212>  PRT
<213>  peptide

<400>  1

Lys Asn Pro Glu Gln
1               5
```

SEQUENCE LISTING

<110> SPECIALITES PET FOOD

<120> MYOTROPIC PEPTIDES AND USES THEREOF

<130> B74579EPD38502

<160> 11

<170> PatentIn version 3.5

<210> 1
<211> 5
<212> PRT
<213> Artificial Sequence

<220>
<223> Myotropic peptide

<400> 1

Lys Asn Pro Glu Gln
1               5

<210> 2
<211> 5
<212> PRT
<213> Artificial Sequence

<220>
<223> Myotropic peptide variant

<400> 2

Gly Asn Pro Glu Gln
1               5

<210> 3
<211> 662
<212> PRT
<213> Lv/Lphemocyanin: hemocyanin from Litopenaeus vannamei (CAA57880.1)

<400> 3

Met Arg Val Leu Val Val Leu Gly Leu Val Ala Ala Ala Ala Phe Gln
1               5                   10                  15

Val Ala Ser Ala Asp Val Gln Gln Gln Lys Asp Val Leu Tyr Leu Leu
            20                  25                  30

Asn Lys Ile Tyr Gly Asp Ile Gln Asp Gly Asp Leu Leu Ala Thr Ala
        35                  40                  45

Asn Ser Phe Asp Pro Val Gly Asn Leu Gly Ser Tyr Ser Asp Gly Gly
    50                  55                  60

Ala Ala Val Gln Lys Leu Val Gln Asp Leu Asn Asp Gly Lys Leu Leu
65 70 75 80

Glu Gln Lys His Trp Phe Ser Leu Phe Asn Thr Arg His Arg Asn Glu
85 90 95

Ala Leu Met Leu Phe Asp Val Leu Ile His Cys Lys Asp Trp Ala Ser
100 105 110

Phe Val Gly Asn Ala Ala Tyr Phe Arg Gln Lys Met Asn Glu Gly Glu
115 120 125

Phe Val Tyr Ala Leu Tyr Val Ala Val Ile His Ser Ser Leu Ala Glu
130 135 140

Gln Val Val Leu Pro Pro Leu Tyr Glu Val Thr Pro His Leu Phe Thr
145 150 155 160

Asn Ser Glu Val Ile Glu Glu Ala Tyr Arg Ala Lys Gln Lys Gln Thr
165 170 175

Pro Gly Lys Phe Lys Ser Ser Phe Thr Gly Thr Lys Lys Asn Pro Glu
180 185 190

Gln Arg Val Ala Tyr Phe Gly Glu Asp Ile Gly Leu Asn Thr His His
195 200 205

Val Thr Trp His Met Glu Phe Pro Phe Trp Trp Asn Asp Ala Tyr Gly
210 215 220

His His Leu Asp Arg Lys Gly Glu Asn Phe Phe Trp Ile His His Gln
225 230 235 240

Leu Thr Val Arg Phe Asp Ala Glu Arg Leu Ser Asn Tyr Leu Asp Pro
245 250 255

Val Gly Glu Leu Gln Trp Asn Lys Pro Ile Val Asp Gly Phe Ala Pro
260 265 270

His Thr Thr Tyr Lys Tyr Gly Gly Gln Phe Pro Ala Arg Pro Asp Asn
275 280 285

Val Lys Phe Glu Asp Val Asp Asp Val Ala Arg Ile Arg Asp Met Val
290 295 300

Ile Val Glu Ser Arg Ile Arg Asp Ala Ile Ala His Gly Tyr Ile Val
305 310 315 320

Asp Ser Glu Gly Lys His Ile Asp Ile Ser Asn Glu Lys Gly Ile Asp
325 330 335

Ile Leu Gly Asp Ile Ile Glu Ser Ser Leu Tyr Ser Pro Asn Val Gln
340 345 350

Tyr Tyr Gly Ala Leu His Asn Thr Ala His Ile Val Leu Gly Arg Gln
355 360 365

Gly Asp Pro His Gly Lys Phe Asp Leu Pro Pro Gly Val Leu Glu His
370 375 380

Phe Glu Thr Ala Thr Arg Asp Pro Ser Phe Phe Arg Leu His Lys Tyr
385 390 395 400

Met Asp Asn Ile Phe Lys Glu His Lys Asp Asn Leu Pro Pro Tyr Thr
405 410 415

Lys Ala Asp Leu Glu Phe Ser Gly Val Ser Val Thr Glu Leu Ala Val
420 425 430

Val Gly Glu Leu Glu Thr Tyr Phe Glu Asp Phe Glu Tyr Ser Leu Ile
435 440 445

Asn Ala Val Asp Asp Ala Glu Gly Ile Pro Asp Val Glu Ile Ser Thr
450 455 460

Tyr Val Pro Arg Leu Asn His Lys Glu Phe Thr Phe Arg Ile Asp Val
465 470 475 480

Glu Asn Gly Gly Ala Glu Arg Leu Ala Thr Val Arg Ile Phe Ala Trp
485 490 495

Pro His Lys Asp Asn Asn Gly Ile Glu Tyr Thr Phe Asp Glu Gly Arg
500 505 510

Trp Asn Ala Ile Glu Leu Asp Lys Phe Trp Val Ser Leu Lys Gly Gly
515 520 525

Lys Thr Ser Ile Glu Arg Lys Ser Thr Glu Ser Ser Val Thr Val Pro
530 535 540

Asp Val Pro Ser Ile His Asp Leu Phe Ala Glu Ala Glu Ala Gly Gly
545 550 555 560

Ala Gly Leu Ala Lys Phe Glu Ser Ala Thr Gly Leu Pro Asn Arg Phe
565 570 575

Leu Leu Pro Lys Gly Asn Asp Arg Gly Leu Glu Phe Asp Leu Val Val
580 585 590

Ala Val Thr Asp Gly Asp Ala Asp Ser Ala Val Pro Asn Leu His Glu
595 600 605

Asn Thr Glu Tyr Asn His Tyr Gly Ser His Gly Val Tyr Pro Asp Lys
610 615 620

Arg Pro His Gly Tyr Pro Leu Asp Arg Lys Val Pro Asp Glu Arg Val
625 630 635 640

Phe Glu Asp Leu Pro Asn Phe Lys His Ile Gln Val Lys Val Phe Asn
645 650 655

His Gly Glu His Ile His
660

<210> 4
<211> 650
<212> PRT
<213> Cahemocyanin: subunit 2 of Hemocyanin from Carcinus aestuarii (P84293.1)

<400> 4

Asp Ser Pro Gly Gly Ala Ser Asp Ala Gln Lys Thr Phe Asp Val Asn
1 5 10 15

Ser Leu Met Pro Val Lys Tyr Glu Glu Ile Arg Asp Pro His Leu Lys
20 25 30

Glu Leu Ser Leu Ser Phe Asp Pro Leu Ser Gly His Tyr Asp Asp Asp
35 40 45

Gly Val Ser Ala Lys Arg Leu Met Lys Glu Leu Asn Glu His Arg Leu
50 55 60

Leu Gln Gln Ser His Trp Phe Ser Leu Phe Asn Pro Arg Thr Arg Glu
65 70 75 80

Glu Asp Leu Met Leu Tyr Asn Val Asp Glu His Ser Gly Asn Trp Asp
85 90 95

Thr Phe Ala Gly Asn Ala Ala Phe Phe Arg Val His Val Asn Glu Gly
100 105 110

Phe Phe Val Tyr Ala Ser Tyr Ser Val Val Ile His Ser Lys Leu Thr

115 120 125

Gln His Val Val Leu Pro Pro Leu Tyr Glu Val Thr Pro His Leu Phe
130 135 140

Thr Asn Ser Glu Val Ile Gln Lys Ala Tyr Ala Ala Lys Met Thr Gln
145 150 155 160

Thr Pro Thr Lys Ile Phe Ala His Phe Thr Gly Ser Lys Ser Asn Pro
165 170 175

Glu Gln Arg Val Ala Tyr Phe Gly Glu Asp Ile Gly Met Asn Thr His
180 185 190

His Val Thr Trp His Leu Glu Phe Pro Phe Trp Trp Asp Asp Ala His
195 200 205

Tyr Asp His His Ile Glu Arg Lys Gly Glu Ser Cys Ser Ser Trp Val
210 215 220

His His Gln Leu Thr Val Arg Phe Asp Ala Glu Arg Leu Ser Asn Tyr
225 230 235 240

Leu Asp Pro Val Arg Glu Leu His Trp Asp Asp Val Ile His Glu Gly
245 250 255

Phe Ala Pro His Thr Ser Tyr Lys Tyr Gly Gly Tyr Phe Pro Asp Arg
260 265 270

Pro Asp Asn Val Asn Phe Glu Asp Val Asp Gly Val Ala Arg Val Arg
275 280 285

Asp Met Leu Leu Phe Glu Glu Arg Ile Gln Asp Ala Ile Ala His Gly
290 295 300

Tyr Leu Arg Tyr Asn Gly Ser Thr Ile Asn Ile Arg Asp Asn His Gly
305 310 315 320

Ile Asp Val Leu Gly Asp Val Phe Glu Ser Ser Met Tyr Ser Pro Arg
325 330 335

Gln Asp Tyr Tyr Gly Ala Leu His Asn Gln Ala His Arg Val Leu Gly
340 345 350

Ser Gln Ala Asp Pro His Gly Lys Phe Ala Leu Pro Pro Gly Val Leu
355 360 365

```
Glu His Phe Glu Thr Ala Thr Arg Asp Pro Ala Phe Phe Arg Leu His
    370                 375                 380

Lys Tyr Met Asp Asn Ile Phe Arg Lys His Lys Asp Ser Leu Thr Pro
385                 390                 395                 400

Tyr Thr Lys Asn Glu Leu Lys Phe Glu Gly Val Asn Ile Asp Ser Ile
                405                 410                 415

Tyr Glu Lys Gly Asn Leu Glu Thr Tyr Phe Glu Ser Phe Met Tyr Thr
            420                 425                 430

Gly Val Asn Ile Met Leu Leu Thr Asn Asp Val Asp Asp Val Asp Ile
        435                 440                 445

Ala Thr Tyr Ile Thr Asp Leu Ala His Lys Glu Leu Ser Phe Gln Glu
    450                 455                 460

Asp Val Thr Asn Glu Gly Asp Ile Gly Val Leu Glu Thr Val Arg Ile
465                 470                 475                 480

Phe Ala Trp Pro His Ile Asp Asp Asp His Val Glu Phe Ser Phe Asn
                485                 490                 495

Glu Gly Arg Trp Asp Val Ile Glu Met Asp Lys Phe Trp Val Met Leu
            500                 505                 510

Glu His Gly His His Ser Ile Asp Arg Ser Ser Phe Asp Ser Thr Val
        515                 520                 525

Thr Ile Pro Asp Arg Pro Ser Phe His Asp Ile Glu Asp Arg Thr Ser
    530                 535                 540

Glu Ala Ile Pro His Gly Lys Glu Leu His Ile Glu Glu Phe Glu Ser
545                 550                 555                 560

Val Thr Gly Leu Pro Asn Arg Phe Leu Ile Pro Lys Gly Leu Val Lys
                565                 570                 575

Gly Lys Asp Met Asp Val Met Val Ala Val Thr Ser Gly Glu Gly Leu
            580                 585                 590

Ala Ala Val Glu Gly Leu His Arg Ser Ala Asn Phe Ala His His Gly
        595                 600                 605

Cys Pro Glu Val Arg Tyr Pro Asp Lys Arg Pro His Gly Tyr Pro Leu
    610                 615                 620
```

Tyr Arg Pro Val Asp Asp Glu Arg Ile Ile Thr Gly Val Thr Asn Phe
625 630 635 640

Lys His Ile Gln Val Lys Val Phe His His
645 650

<210> 5
<211> 566
<212> PRT
<213> Alhemocyanin B chain: B chain of hemocyanin from Astacus leptodactylus (P83180.1)

<400> 5

Asp Ala Ser Gly Ala Thr Leu Ala Lys Arg Gln Gln Val Val Asn His
1 5 10 15

Leu Leu Glu His Ile Tyr Asp His Thr His Phe Thr Asp Leu Lys Asn
20 25 30

Ile Ala Gly Thr Phe Ser Pro Glu Ala Ala Thr Ser Ile Tyr Thr Asp
35 40 45

Asp Met Glu Glu Leu Arg Asp Gly Arg Leu Leu Glu Gln His His Trp
50 55 60

Phe Ser Leu Phe Asn Thr Arg Gln Arg Met Leu Phe Glu Val Leu Ile
65 70 75 80

His Cys Lys Ser Trp Glu Cys Phe Leu Asp Asn Ala Ala Tyr Phe Arg
85 90 95

Glu Arg Met Asn Glu Gly Glu Phe Val Tyr Ala Ile Tyr Val Ala Val
100 105 110

Ile His Ser Gly Ile Gly His Gly Ile Val Ile Pro Pro Ile Tyr Glu
115 120 125

Val Thr Pro His Ile Phe Thr Asn Ser Glu Val Ile Asn Lys Ala Tyr
130 135 140

Ser Ala Lys Met Thr Gln Thr Pro Gly Arg Phe Asn Met Asp Phe Thr
145 150 155 160

Gly Thr Lys Lys Asn Lys Glu Gln Arg Val Ala Tyr Phe Gly Glu Asp
165 170 175

Ile Gly Met Asn Ile His His Val Thr Trp His Met Asp Phe Pro Phe
180 185 190

```
Trp Trp Lys Asp Ser Tyr Gly Tyr His Leu Asp Arg Lys Gly Glu Leu
            195                 200                 205

Phe Phe Trp Val His His Gln Leu Thr Ala Arg Phe Asp Ser Glu Arg
    210                 215                 220

Ile Ser Asn Trp Ile Asp Val Val Asp Glu Ile His Trp Ser Cys Ile
225                 230                 235                 240

Glu Gly Phe Ala Pro His Thr Ser Tyr Lys Tyr Gly Gly Glu Phe Pro
                245                 250                 255

Ala Arg Pro Asp Asn Val His Phe Glu Asp Val Asp Gly Val Ala Arg
            260                 265                 270

Val Arg Asp Ser Arg Ile Arg Asp Ala Leu Ala His Gly Tyr Leu Leu
        275                 280                 285

Asp Asn Ser Gly Asn Lys Ser Ser Val Tyr Ser Pro Asn Val Gln Tyr
    290                 295                 300

Tyr Gly Ala Ile His Asn Thr Ala His Ile Met Ile Gly Arg Gln Gly
305                 310                 315                 320

Asp His Lys Phe Asp Met Pro Pro Gly Val Met Glu His Phe Glu Thr
                325                 330                 335

Ala Thr Arg Asp Pro Ser Phe Phe Arg Leu His Lys Tyr Met Asp Asn
            340                 345                 350

Ile Phe Lys Glu His Lys Asp Ser Leu Pro Pro Tyr Thr Lys Asn Asp
        355                 360                 365

Ile Ala Val Pro Gly Val Val Ile Asp Ser Val Ala Gln Leu Lys Thr
    370                 375                 380

Phe Phe Asp Thr Phe Glu Val Asn Leu Gly Asn Ala Lys Val Ala Asp
385                 390                 395                 400

Val Ala Ile Ser Ala Asp Val His Arg Ile Asn His Glu Glu Phe Ser
                405                 410                 415

Tyr Asn Ile Asp Ile Ser Asn Thr Asp Lys Ile Phe Ile Cys Pro Val
            420                 425                 430

Lys Asp Asp Asn Gly Ile Met Asp Lys Phe Tyr Lys Ser Ile Asp Pro
```

```
        435                 440                 445

Gly Thr Asn His Ile Val Arg Lys Ser Val Asp Ser Ser Val Thr Val
    450                 455                 460

Pro Asp Arg Gln Tyr Ala Leu Asp Leu His Met Phe Glu Arg Ser Cys
465                 470                 475                 480

Gly Ile Pro Asn Arg Asp Met Ile Ile Ile Glu Ser Arg Pro Asp Gly
                485                 490                 495

Met Asp Phe Ala Leu Phe Val Thr Val Asp Asp Pro Glu Glu Ile Gly
            500                 505                 510

Ala Thr His Ser Gln His Gly Ile Lys Lys Tyr Pro Asp Lys Lys Pro
        515                 520                 525

Met Gly Tyr Pro Val Asp Arg Ser Ile Pro Asp Asn Arg Val Phe Leu
    530                 535                 540

Glu Ser Pro Asn Ile Lys Arg Thr Tyr Val Lys Val Phe His Asp Glu
545                 550                 555                 560

His Gly Gly Glu Gln His
                565


<210>  6
<211>  657
<212>  PRT
<213>  Pvhemocyanin: Hemocyanin from Palinurus vulgaris (P80888.2)

<400>  6

Asp Val His Ser Ser Asp Asn Ala His Lys Gln His Asp Val Asn His
1               5                   10                  15

Leu Leu Asp Lys Ile Tyr Glu Pro Ile Lys Asp Glu Lys Leu His Asn
            20                  25                  30

Thr Ala His Thr Phe Asn Pro Val Ala Asp Thr Ser Ile Tyr Gly Asp
        35                  40                  45

Asp Gly Ala Ala Ala Lys Thr Leu Met Gln Lys Leu Asn Asp His Arg
    50                  55                  60

Leu Leu Glu Glu His His Trp Phe Ser Leu Phe Asn Thr Arg Gln Arg
65                  70                  75                  80

Glu Glu Leu Ala Met Leu Phe Thr Val Leu Asn Gln Cys Lys Glu Trp
```

85 90 95

Asp Phe Leu Asn Asn Asn Ala Ala Phe Phe Arg Glu Arg Met Asn Glu
100 105 110

Gly Glu Phe Val Tyr Ala Leu Tyr Val Ser Val Ile His Ser Lys Leu
115 120 125

Gly Asp Gly Ile Val Leu Pro Pro Leu Tyr Gln Ile Thr Pro His Met
130 135 140

Phe Thr Asn Ser Glu Val Ile Asp Lys Ala Tyr Ser Ala Lys Met Thr
145 150 155 160

His Lys Glu Gly Thr Phe Asn Met Ser Phe Thr Gly Thr Gln Lys Asn
165 170 175

Arg Glu Gln Arg Val Ala Tyr Phe Gly Gln Asp Ile Gly Met Asn Ile
180 185 190

His His Val Thr Trp His Met Asp Phe Pro Phe Trp Trp Asp Asp Ser
195 200 205

Tyr Gly Tyr His Leu Asp Arg Lys Gly Glu Leu Phe Phe Trp Val His
210 215 220

His Gln Leu Thr Ala Arg Phe Asp Ala Glu Arg Phe Ser Asn Trp Met
225 230 235 240

Asp Pro Val Asp Glu Leu His Trp Asp Asp Ile Ile His Glu Gly Phe
245 250 255

Ala Pro His Ala Ser Tyr Lys Tyr Gly Gly Glu Phe Pro Thr Arg Pro
260 265 270

Asp Asn Thr His Phe Lys Asn Val Asp Gly Val Ala Arg Val Arg Asp
275 280 285

Met Glu Ile Thr Glu Asn Arg Ile Arg Asp Ala Ile Ala His Gly Tyr
290 295 300

Ile Thr Ala Thr Asp Gly His Thr Ile Asp Ile Arg Gln Pro Asn Gly
305 310 315 320

Ile Glu Leu Leu Gly Asp Ile Ile Glu Ser Ser Met Tyr Ser Ser Asn
325 330 335

```
Pro His Tyr Pro Gly Ser Leu His Asn Thr Ala His Gly Met Leu Gly
            340                 345                 350

Arg Gln Gly Asp Pro His Gly Lys Phe Asn Met Pro Pro Gly Val Met
        355                 360                 365

Glu His Phe Glu Thr Ala Thr Arg Asp Pro Ser Phe Phe Arg Leu His
    370                 375                 380

Lys Tyr Met Asp Asn Ile Phe Lys Glu His Thr Asp Ser Phe Pro Pro
385                 390                 395                 400

Tyr Thr His Glu Asp Leu Glu Phe Pro Gly Val Ser Val Asp Asn Ile
                405                 410                 415

Ala Ile Glu Gly His Leu Thr Thr Phe Phe Asp Gln Phe Lys Tyr Ser
            420                 425                 430

Leu Val Asn Ala Val Asp Ser Gly Glu Asn Val Glu Asp Val Glu Ile
        435                 440                 445

Tyr Ala Asn Val His Arg Leu Asn His Glu Glu Phe Thr Tyr Asp Ile
    450                 455                 460

Glu Val Arg Asn His Asn Glu Glu Asp Lys Phe Ala Thr Val Arg Ile
465                 470                 475                 480

Phe Leu Cys Pro Thr Glu Asp Asn Asn Gly Ile Thr Leu Asn Leu Asp
                485                 490                 495

Glu Ala Arg Trp Leu Cys Leu Glu Leu Asp Lys Phe Trp Thr Lys Leu
            500                 505                 510

Gly Asp Gly Lys Asn Leu Ile Glu Arg Ser Ser Lys Asp Ser Ser Val
        515                 520                 525

Thr Val Pro Asp Met Pro Ser Phe Glu Ser Leu Lys Lys Gln Ala Asp
    530                 535                 540

Glu Ala Val Asn Gly Gly His Asp Leu Asp Leu Ser Ala Tyr Glu Arg
545                 550                 555                 560

Ser Cys Gly Ile Pro Asp Arg Met Leu Leu Pro Lys Ser Lys Pro Gln
                565                 570                 575

Gly Met Glu Phe Asn Leu Tyr Val Ala Val Thr Asp Gly Asp Lys Asp
            580                 585                 590
```

Thr Asp Gly Ser His Gly Asp His Asp His His Gly Thr His Ala Gln
595 600 605

Cys Gly Ile His Gly Glu Leu Tyr Pro Asp His Arg Pro Leu Gly Tyr
610 615 620

Pro Leu Glu Arg Arg Ile Pro Asp Asp Arg Val Phe Asp Gly Val Ser
625 630 635 640

Asn Ile Lys His Ala Leu Val Lys Ile Val His Asp Pro Glu Leu Arg
645 650 655

Ala

<210> 7
<211> 684
<212> PRT
<213> HaPseudohemocyanin 1: Pseudohemocyanin1 from Homarus americanus (Q6KF82.1)

<400> 7

Ser Leu Val Val Ala Ala Ala Ala Ala Ser Pro Tyr Ser Gly Ser His
1 5 10 15

Asp Phe Ser Gly Phe Gln Arg Asp Glu Pro Asp Gly Val Pro Thr Ala
20 25 30

Gln Lys Gln His Asp Ile Asn Phe Leu Leu His Lys Leu Tyr Glu Pro
35 40 45

Leu His Glu Ala Asn Leu Lys Ala Leu Glu Asp Ser Phe Asp Pro Leu
50 55 60

Thr His Thr Ala Asn Met Pro Asp Ala Gly Val Ala Val Asn Lys Leu
65 70 75 80

Met Gln Glu Val Lys Thr Gln His Leu Glu Glu Arg His His Trp Phe
85 90 95

Ser Val Phe Asn Ala Thr Gln Arg Glu Glu Ala Leu Leu Leu Val Lys
100 105 110

Val Leu Leu Gln Cys Gln Asp Trp Pro Thr Ala Ile Gly Asn Ala Val
115 120 125

Tyr Phe Arg Lys Met Met Asn Glu Glu Thr Tyr Val Tyr Ala Leu Tyr
130 135 140

Thr Ala Ile Lys His Ser Pro Leu Thr Lys His Val Val Leu Pro Pro
145 150 155 160

Leu Tyr Glu Ile Met Pro His Phe Phe Thr Ser Ser Glu Val Ile Gln
165 170 175

Gln Ala Tyr Arg Ala Lys Met Ile Gly Gln Pro Gly Lys Phe Asn Met
180 185 190

Asn Phe Thr Gly Thr Gln Asn Asn Pro Glu His Lys Ile Ala Tyr Phe
195 200 205

Gly Glu Asp Ile Gly Leu Ser Thr His Tyr Ile Asn Trp His Ile Glu
210 215 220

Tyr Pro Phe Trp Trp Asn Glu Thr Phe Gly Tyr Gln Ile Glu Arg Arg
225 230 235 240

Gly Glu Asn Tyr Phe Trp Val His His Gln Leu Val Asn Arg Phe Glu
245 250 255

Ala Glu Arg Ile Ser Asn His Leu Gln Lys Ile Glu Lys Leu His Trp
260 265 270

Glu Arg Asn Leu His Glu Gly Phe Asp Pro His Thr Ser Tyr Lys Asn
275 280 285

Gly Glu His Phe Pro Phe Arg His Asp Asp Ile His Ile Glu Asp Val
290 295 300

Asp Lys Val Ala Glu Val Arg Asp Met Ile Val Met Glu Asn Arg Ile
305 310 315 320

Arg Asp Ala Ile Ala His Gly Tyr Val Ile Asp Lys Glu Gly Asn Lys
325 330 335

Val Asp Ile Asn Asn Glu His Gly Ile Asp Ile Leu Gly Glu Ile Ile
340 345 350

Glu Ser Cys Val Tyr Asn Pro Tyr Asn Glu Tyr Tyr Gly Ser Leu His
355 360 365

Asn Met Gly His Met Met Leu Gly His Gln Gly Asp Pro His Ala Lys
370 375 380

Tyr Tyr Asp Thr Pro Ser Val Leu Glu His Tyr Glu Thr Thr Leu Arg

385 390 395 400

Asp Pro Ala Phe Tyr Lys Leu His Lys Tyr Ile Asp Asp Leu Phe Arg
405 410 415

Lys His Lys Asp His Leu Lys Pro Tyr Ser Arg Lys Glu Leu Leu Phe
420 425 430

Pro Gly Ile Ala Ile Asn Asn Ile His Ile Asp Gly Pro Leu Glu Thr
435 440 445

Tyr Phe Glu Asp Tyr Glu Tyr Ser Leu Met Asn Ala Met Asp Asp Lys
450 455 460

Glu Glu Met Lys Trp Glu Asp Asn Met Glu Ile Ser Ala Ile Ile Pro
465 470 475 480

Arg Leu Arg His Lys Asp Phe Ser Phe Lys Val Asn Ile Met Asn Asn
485 490 495

Asn Asp Glu Asn Lys Leu Ala Thr Ile Arg Ile Phe Ala Trp Pro His
500 505 510

Arg Asp Val Asn Gly Val Ile Met Pro Phe Asn Glu Gly Arg Trp His
515 520 525

Ala Ile Glu Leu Asp Lys Phe Trp Lys Tyr Leu Ala Pro Gly Glu Asn
530 535 540

Glu Val Thr Arg Lys Cys Asp Glu Ser Ser Val Thr Val Pro Asp Val
545 550 555 560

Pro Ser Leu Lys Ser Leu His Glu Gln Ala Glu Ala Ala Ile Ala Gly
565 570 575

Ile Ser Glu Leu Asn Leu Glu Glu Phe Val Ser Ala Thr Gly Leu Pro
580 585 590

Asn Arg Leu Leu Ile Pro Lys Gly Asn Ala Ala Gly Val Glu Phe Lys
595 600 605

Leu Val Val Ala Val Thr Asp Gly Glu Ala Asp Ser Val Asn Asp Glu
610 615 620

Ile Asn Leu Thr Thr Lys Phe His His Tyr Gly His His Gly Val Tyr
625 630 635 640

```
Leu Asp Lys Lys Ser His Gly Tyr Pro Leu Asp Arg Arg Val Pro Asp
                645                 650                 655

Glu Arg Leu Phe His Glu Ile Pro Asn Phe Gly Glu Thr Ile Val Lys
            660                 665                 670

Val Phe Asn His Asn Glu His Val His Arg His Glu
        675                 680
```

<210> 8
<211> 681
<212> PRT
<213> HaPseudohemocyanin 2: Pseudohemocyanin2 from Homarus americanus (Q6KF81.1)

<400> 8

```
Val Leu Leu Cys Ser Leu Val Ala Ala Thr Ala Ala Trp Pro Tyr Phe
1               5                   10                  15

Gly Gly Phe Gln Arg Asp Glu Pro Asp Gly Val Pro Thr Ala Gln Lys
            20                  25                  30

Gln His Asp Ile Asn Phe Leu Leu His Lys Leu Tyr Glu Pro Leu His
        35                  40                  45

Glu Ala Asn Leu Lys Ala Leu Glu Asp Ser Phe Asp Pro Leu Ala His
    50                  55                  60

Thr Ala Asn Met Pro Asp Gly Gly Val Ala Val Asn Lys Leu Met Gln
65                  70                  75                  80

Glu Val Lys Thr Gln His Leu Glu Glu Arg His His Trp Phe Ser Val
                85                  90                  95

Phe Asn Ala Thr Gln Arg Glu Glu Ala Leu Leu Leu Val Lys Val Leu
            100                 105                 110

Leu Gln Cys Gln Asp Trp Pro Thr Ala Ile Gly Asn Ala Val Tyr Phe
        115                 120                 125

Arg Lys Met Met Asn Glu Glu Thr Tyr Val Tyr Ala Leu Tyr Thr Ala
    130                 135                 140

Ile Lys His Ser Pro Leu Thr Lys His Val Val Leu Pro Pro Leu Tyr
145                 150                 155                 160

Glu Ile Met Pro His Phe Phe Thr Ser Ser Glu Val Ile Gln Gln Ala
                165                 170                 175
```

```
Tyr Arg Ala Lys Leu Ile Glu Lys Pro Gly Arg Phe Asn Met Asn Phe
            180                 185                 190

Thr Gly Thr Gln Asn Asn Pro Glu His Lys Ile Ala Tyr Phe Gly Glu
        195                 200                 205

Asp Ile Gly Leu Ser Thr His Tyr Ile Asn Trp His Ile Glu Tyr Pro
    210                 215                 220

Phe Trp Trp Asn Glu Thr Phe Gly Tyr Gln Ile Glu Arg Arg Gly Glu
225                 230                 235                 240

Asn Tyr Phe Trp Val His His Gln Leu Val Asn Arg Phe Glu Ala Glu
                245                 250                 255

Arg Ile Ser Asn His Leu Gln Lys Ile Glu Lys Leu His Trp Glu Arg
            260                 265                 270

Asn Leu His Glu Gly Phe Asp Pro His Thr Ser Tyr Lys Asn Gly Asn
        275                 280                 285

Pro Phe Pro Phe Arg His Asp Asp Ile His Ile Glu Asp Val Asp Lys
    290                 295                 300

Val Ala Glu Val Arg Asp Met Ile Val Met Glu Asn Arg Ile Arg Asp
305                 310                 315                 320

Ala Ile Ala His Gly Tyr Val Ile Asp Lys Glu Gly Asn Lys Val Asp
                325                 330                 335

Ile Asn Asn Glu His Gly Ile Asp Ile Leu Gly Asp Ile Ile Glu Ser
            340                 345                 350

Cys Val Tyr Asn Pro Tyr Asn Glu Tyr Tyr Gly Ser Leu His Asn Met
        355                 360                 365

Gly His Met Met Leu Gly His Gln Gly Asp Pro His Ala Lys Tyr Tyr
    370                 375                 380

Asp Thr Pro Ser Val Leu Glu His Tyr Glu Thr Ala Leu Arg Asp Pro
385                 390                 395                 400

Ala Phe Tyr Lys Leu His Lys Tyr Ile Asp Asp Leu Phe Arg Lys His
                405                 410                 415

Lys Asp His Leu Lys Pro Tyr Ser Gln Glu Asp Leu Leu Phe Pro Gly
            420                 425                 430
```

```
Val Ala Val Asn Met Ile Asp Ile Asp Gly Pro Leu Glu Thr Tyr Phe
        435                 440                 445

Glu Asp Tyr Glu Tyr Ser Leu Met Asn Ala Met Asp Asp Lys Glu Glu
    450                 455                 460

Met Ile Trp Glu Asp Ser Met Glu Ile Ser Ala Ile Ile Pro Arg Leu
465                 470                 475                 480

Arg His Lys Asp Phe Ser Phe Lys Val Asn Ile Met Asn Asn Asn Asp
                485                 490                 495

Glu Asn Lys Leu Ser Thr Ile Arg Ile Phe Ala Trp Pro His Arg Asp
            500                 505                 510

Val Asn Gly Val Ile Met Pro Phe Asn Glu Gly Arg Trp His Ala Ile
        515                 520                 525

Glu Leu Asp Lys Phe Gln Lys Glu Leu Ile Pro Gly Glu Asn Thr Ile
    530                 535                 540

Thr Arg Lys Ser Ser Glu Ser Ser Val Thr Val Pro Asp Val Pro Ser
545                 550                 555                 560

Leu Lys Ser Leu His Glu Gln Thr Glu Ala Ala Ile Ala Gly Ser Ser
                565                 570                 575

Glu Leu Asn Leu Asp Glu Phe Val Ser Ala Thr Gly Leu Pro Asn Arg
            580                 585                 590

Leu Leu Ile Pro Lys Gly Asn Glu Ala Gly Val Glu Phe Lys Leu Val
        595                 600                 605

Val Ala Val Thr Asp Gly Val Ala Asp Ser Val Asn Asp Glu Ile Asn
    610                 615                 620

Leu Thr Thr Lys Phe His His Tyr Gly His His Gly Val Tyr Leu Asp
625                 630                 635                 640

Lys Lys Pro His Gly Tyr Pro Leu Asp Arg Arg Val Pro Asp Glu Arg
                645                 650                 655

Leu Phe His Glu Ile Pro Asn Phe Gly Glu Thr Ile Val Lys Val Phe
            660                 665                 670

Asn Arg Asp Glu His Val Tyr His His
```

675 680

<210> 9
<211> 657
<212> PRT
<213> Pihemocyanin A: A chain of hemocyanin from Panulirus interruptus (P04254.2)

<400> 9

```
Asp Ala Leu Gly Thr Gly Asn Ala Gln Lys Gln Gln Asp Ile Asn His
1               5                   10                  15

Leu Leu Asp Lys Ile Tyr Glu Pro Thr Lys Tyr Pro Asp Leu Lys Glu
            20                  25                  30

Ile Ala Glu Asn Phe Asn Pro Leu Gly Asp Thr Ser Ile Tyr Asn Asp
        35                  40                  45

His Gly Ala Ala Val Glu Thr Leu Met Lys Glu Leu Asn Asp His Arg
    50                  55                  60

Leu Leu Glu Gln Arg His Trp Tyr Ser Leu Phe Asn Thr Arg Gln Arg
65                  70                  75                  80

Lys Glu Ala Leu Met Leu Phe Ala Val Leu Asn Gln Cys Lys Glu Trp
                85                  90                  95

Tyr Cys Phe Arg Ser Asn Ala Ala Tyr Phe Arg Glu Arg Met Asn Glu
            100                 105                 110

Gly Glu Phe Val Tyr Ala Leu Tyr Val Ser Val Ile His Ser Lys Leu
        115                 120                 125

Gly Asp Gly Ile Val Leu Pro Pro Leu Tyr Gln Ile Thr Pro His Met
    130                 135                 140

Phe Thr Asn Ser Glu Val Ile Asp Lys Ala Tyr Ser Ala Lys Met Thr
145                 150                 155                 160

Gln Lys Gln Gly Thr Phe Asn Val Ser Phe Thr Gly Thr Lys Lys Asn
                165                 170                 175

Arg Glu Gln Arg Val Ala Tyr Phe Gly Glu Asp Ile Gly Met Asn Ile
            180                 185                 190

His His Val Thr Trp His Met Asp Phe Pro Phe Trp Trp Glu Asp Ser
        195                 200                 205
```

```
Tyr Gly Tyr His Leu Asp Arg Lys Gly Glu Leu Phe Phe Trp Val His
    210                 215                 220

His Gln Leu Thr Ala Arg Phe Asp Phe Glu Arg Leu Ser Asn Trp Leu
225                 230                 235                 240

Asp Pro Val Asp Glu Leu His Trp Asp Arg Ile Ile Arg Glu Gly Phe
                245                 250                 255

Ala Pro Leu Thr Ser Tyr Lys Tyr Gly Gly Glu Phe Pro Val Arg Pro
            260                 265                 270

Asp Asn Ile His Phe Glu Asp Val Asp Gly Val Ala His Val His Asp
        275                 280                 285

Leu Glu Ile Thr Glu Ser Arg Ile His Glu Ala Ile Asp His Gly Tyr
    290                 295                 300

Ile Thr Asp Ser Asp Gly His Thr Ile Asp Ile Arg Gln Pro Lys Gly
305                 310                 315                 320

Ile Glu Leu Leu Gly Asp Ile Ile Glu Ser Ser Lys Tyr Ser Ser Asn
                325                 330                 335

Val Gln Tyr Tyr Gly Ser Leu His Asn Thr Ala His Val Met Leu Gly
            340                 345                 350

Arg Gln Gly Asp Pro His Gly Lys Phe Asn Leu Pro Pro Gly Val Met
        355                 360                 365

Glu His Phe Glu Thr Ala Thr Arg Asp Pro Ser Phe Phe Arg Leu His
    370                 375                 380

Lys Tyr Met Asp Asn Ile Phe Lys Lys His Thr Asp Ser Phe Pro Pro
385                 390                 395                 400

Tyr Thr His Asp Asn Leu Glu Phe Ser Gly Met Val Val Asn Gly Val
                405                 410                 415

Ala Ile Asp Gly Glu Leu Ile Thr Phe Phe Asp Glu Phe Gln Tyr Ser
            420                 425                 430

Leu Ile Asn Ala Val Asp Ser Gly Glu Asn Ile Glu Asp Val Glu Ile
        435                 440                 445

Asn Ala Arg Val His Arg Leu Asn His Lys Glu Phe Thr Tyr Lys Ile
    450                 455                 460
```

Thr Met Ser Asn Asn Asn Asp Gly Glu Arg Leu Ala Thr Phe Arg Ile
465 470 475 480

Phe Leu Cys Pro Ile Glu Asp Asn Asn Gly Ile Thr Leu Thr Leu Asp
485 490 495

Glu Ala Arg Trp Phe Cys Ile Glu Leu Asp Lys Phe Phe Gln Lys Val
500 505 510

Pro Lys Gly Pro Glu Thr Ile Glu Arg Ser Ser Lys Asp Ser Ser Val
515 520 525

Thr Val Pro Asp Met Pro Ser Phe Gln Ser Leu Lys Glu Gln Ala Asp
530 535 540

Asn Ala Val Asn Gly Gly His Asp Leu Asp Leu Ser Ala Tyr Glu Arg
545 550 555 560

Ser Cys Gly Ile Pro Asp Arg Met Leu Leu Pro Lys Ser Lys Pro Glu
565 570 575

Gly Met Glu Phe Asn Leu Tyr Val Ala Val Thr Asp Gly Asp Lys Asp
580 585 590

Thr Glu Gly His Asn Gly Gly His Asp Tyr Gly Gly Thr His Ala Gln
595 600 605

Cys Gly Val His Gly Glu Ala Tyr Pro Asp Asn Arg Pro Leu Gly Tyr
610 615 620

Pro Leu Glu Arg Arg Ile Pro Asp Glu Arg Val Ile Asp Gly Val Ser
625 630 635 640

Asn Ile Lys His Val Val Val Lys Ile Val His His Leu Glu His His
645 650 655

Asp

<210> 10
<211> 657
<212> PRT
<213> Pihemocyanin B: B chain of hemocyanin from Panulirus interruptus (P10787.1)

<400> 10

Asp Ala Leu Gly Thr Gly Asn Ala Asn Lys Gln Gln Asp Ile Asn His
1 5 10 15

```
Leu Leu Asp Lys Ile Tyr Glu Pro Thr Lys Tyr Pro Asp Leu Lys Asp
            20                  25                  30

Ile Ala Glu Asn Phe Asn Pro Leu Gly Asp Thr Ser Ile Tyr Asn Asp
        35                  40                  45

His Gly Ala Ala Ala Glu Ala Leu Met Lys Glu Leu Asn Asp His Arg
    50                  55                  60

Leu Leu Glu Gln Arg His Trp Phe Ser Leu Phe Asn Thr Arg Gln Arg
65                  70                  75                  80

Glu Glu Ala Leu Met Leu Phe Ala Val Leu Asn Gln Cys Lys Glu Trp
                85                  90                  95

Tyr Cys Phe Arg Ser Asn Ala Ala Tyr Phe Arg Glu Arg Met Asn Glu
            100                 105                 110

Gly Glu Phe Val Tyr Ala Leu Tyr Val Ser Val Ile His Ser Lys Leu
        115                 120                 125

Gly Asp Gly Ile Val Leu Pro Pro Leu Tyr Glu Ile Thr Pro His Met
    130                 135                 140

Phe Thr Asn Ser Glu Val Ile Asp Lys Ala Tyr Ser Ala Lys Met Thr
145                 150                 155                 160

Gln Lys Pro Gly Thr Phe Asn Val Ser Phe Thr Gly Thr Lys Lys Asn
                165                 170                 175

Arg Glu Gln Arg Val Ala Tyr Phe Gly Glu Asp Ile Gly Met Asn Ile
            180                 185                 190

His His Val Thr Trp His Met Asp Phe Pro Thr Trp Trp Gln Asp Ser
        195                 200                 205

Tyr Gly Tyr His Leu Asp Arg Lys Gly Glu Leu Phe Phe Trp Val His
    210                 215                 220

His Gln Leu Thr Ala Arg Phe Asp Phe Glu Arg Leu Ser Asn Trp Leu
225                 230                 235                 240

Asp Pro Val Asp Glu Leu His Trp Asp Arg Ile Ile Arg Glu Gly Phe
                245                 250                 255

Ala Pro Leu Thr Ser Tyr Lys Tyr Gly Gly Glu Phe Pro Val Arg Pro
```

260 265 270

Asp Asn Ile His Phe Glu Asp Val Asp Gly Val Ala His Val His Asp
275 280 285

Leu Glu Ile Thr Glu Ser Arg Ile His Asp Ala Ile Asp His Gly Tyr
290 295 300

Ile Thr Asp Ser Asp Gly His Thr Ile Asp Ile Arg Gln Pro Lys Gly
305 310 315 320

Ile Glu Leu Leu Gly Asp Ile Ile Glu Ser Ser Met Tyr Ser Ser Asn
325 330 335

Val Gln Tyr Tyr Gly Ser Leu His Asn Thr Ala His Ala Met Leu Gly
340 345 350

Arg Gln Gly Asp Pro His Gly Lys Phe Asn Leu Pro Pro Gly Val Met
355 360 365

Glu His Phe Glu Thr Ala Thr Arg Asp Pro Ser Phe Phe Arg Leu His
370 375 380

Lys Tyr Met Asp Asn Ile Phe Lys Lys His Thr Asp Ser Phe Pro Pro
385 390 395 400

Tyr Thr His Asp Asp Leu Glu Phe Ala Gly Met Val Val Asp Gly Ile
405 410 415

Ala Ile Asp Gly Glu Leu Ile Thr Phe Phe Asp Glu Phe Gln Tyr Ser
420 425 430

Ile Leu Asn Ala Val Asp Ser Gly Glu Asn Ile Glu Asp Val Asp Ile
435 440 445

Asn Ala Arg Val His Arg Leu Asn His Asn Glu Phe Thr Tyr Lys Ile
450 455 460

Thr Met Ser Asn Asn Asn Asp Gly Glu Arg Leu Ala Thr Phe Arg Ile
465 470 475 480

Phe Leu Cys Pro Ile Glu Asp Asn Asn Gly Ile Thr Leu Thr Leu Asp
485 490 495

Glu Ala Arg Trp Phe Cys Ile Glu Leu Asp Lys Phe Phe Gln Lys Val
500 505 510

Pro Ser Gly Pro Glu Thr Ile Glu Arg Ser Ser Lys Asp Ser Ser Val
515 520 525

Thr Val Pro Asp Met Pro Ser Phe Gln Ser Leu Lys Glu Gln Ala Asp
530 535 540

Asn Ala Val Asn Gly Gly His Asp Leu Asp Leu Ser Ala Tyr Glu Arg
545 550 555 560

Ser Cys Gly Ile Pro Asp Arg Met Leu Leu Pro Lys Ser Lys Pro Glu
565 570 575

Gly Met Lys Phe Asn Leu Tyr Val Ala Val Thr Asp Gly Asp Lys Asp
580 585 590

Thr Glu Gly His Asn Gly Gly His Asp Tyr Gly Gly Thr His Ala Gln
595 600 605

Cys Gly Val His Gly Glu Ala Phe Pro Asp Asn Arg Pro Leu Gly Tyr
610 615 620

Pro Leu Glu Arg Arg Ile Pro Asp Glu Arg Val Ile Asp Gly Val Ser
625 630 635 640

Asn Ile Lys His Val Val Val Lys Ile Val His His Leu Glu His His
645 650 655

Asp

<210> 11
<211> 661
<212> PRT
<213> Pihemocyanin C: C chain of hemocyanin from Panulirus interruptus (P80096.1)

<400> 11

Ala Asp Cys Gln Ala Gly Asp Ser Ala Asp Lys Leu Leu Ala Gln Lys
1 5 10 15

Gln His Asp Val Asn Tyr Leu Val Tyr Lys Leu Tyr Gly Asp Ile Arg
20 25 30

Asp Asp His Leu Lys Glu Leu Gly Glu Thr Phe Asn Pro Gln Gly Asp
35 40 45

Leu Leu Leu Tyr His Asp Asn Gly Ala Ser Val Asn Thr Leu Met Ala
50 55 60

Asp Phe Lys Asp Gly Arg Leu Leu Gln Lys Lys His Trp Phe Ser Leu
65 70 75 80

Phe Asn Thr Arg Gln Arg Glu Glu Ala Leu Met Met His Arg Val Leu
85 90 95

Met Asn Cys Lys Asn Trp His Ala Phe Val Ser Asn Ala Ala Tyr Phe
100 105 110

Arg Thr Asn Met Asn Glu Gly Glu Tyr Leu Tyr Ala Leu Tyr Val Ser
115 120 125

Leu Ile His Ser Gly Leu Gly Glu Gly Val Val Leu Pro Pro Leu Tyr
130 135 140

Glu Val Thr Pro His Met Phe Thr Asn Ser Glu Val Ile His Glu Ala
145 150 155 160

Tyr Lys Ala Gln Met Thr Asn Thr Pro Ser Lys Phe Glu Ser His Phe
165 170 175

Thr Gly Ser Lys Lys Asn Pro Glu Gln His Val Ala Tyr Phe Gly Glu
180 185 190

Asp Val Gly Met Asn Thr His His Val Leu Trp His Met Glu Phe Pro
195 200 205

Phe Trp Trp Glu Asp Ser Ser Gly Arg His Leu Asp Arg Lys Gly Glu
210 215 220

Ser Phe Phe Trp Val His His Gln Leu Thr Val Arg Tyr Asp Ala Glu
225 230 235 240

Arg Leu Ser Asn His Leu Asp Pro Val Glu Glu Leu Ser Trp Asn Lys
245 250 255

Ala Ile Asp Glu Gly Phe Ala Pro His Thr Ala Tyr Lys Tyr Gly Gly
260 265 270

Tyr Phe Pro Ser Arg Pro Asp Asn Val His Phe Ser Asp Val Asp Gly
275 280 285

Val Ala Arg Val Arg Asp Met Ser Met Thr Glu Asp Arg Ile Arg Asp
290 295 300

Ala Ile Ala His Gly Tyr Ile Asp Ala Leu Asp Gly Ser His Ile Asp
305 310 315 320

```
Ile Met Asn Ser His Gly Ile Glu Phe Leu Gly Asp Ile Ile Glu Ser
                325                 330                 335

Ser Gly Tyr Ser Ala Asn Pro Gly Phe Tyr Gly Ser Leu His Asn Thr
            340                 345                 350

Ala His Ile Met Leu Gly Arg Gln Gly Asp Pro Thr Gly Lys Phe Asp
        355                 360                 365

Leu Pro Pro Gly Val Leu Glu His Phe Glu Thr Ser Thr Arg Asp Pro
    370                 375                 380

Ser Phe Phe Arg Leu His Lys Tyr Met Asp Asn Ile Phe Arg Glu His
385                 390                 395                 400

Lys Asp Ser Leu Thr Pro Tyr Thr Arg Asp Glu Leu Glu Phe Asn Gly
                405                 410                 415

Val Ser Ile Asp Ser Ile Ala Ile Glu Gly Thr Leu Glu Thr Phe Phe
            420                 425                 430

Glu Asn Phe Glu Tyr Ser Leu Leu Asn Ala Val Asp Asp Thr Val Asp
        435                 440                 445

Ile Ala Asp Val Glu Ile Leu Thr Tyr Ile Glu Arg Leu Asn His Lys
    450                 455                 460

Lys Phe Ser Phe Leu Ile Leu Val Thr Asn Asn Asn Asn Thr Glu Val
465                 470                 475                 480

Leu Ala Thr Val Arg Ile Phe Ala Trp Pro Leu Arg Asp Asn Asn Gly
                485                 490                 495

Ile Glu Tyr Ser Phe Asn Glu Gly Arg Trp Arg Ala Leu Glu Leu Asp
            500                 505                 510

Arg Phe Trp Val Lys Val Lys His Gly His His Gln Ile Thr Arg Gln
        515                 520                 525

Ser Thr Glu Ser Ser Val Thr Val Pro Asp Val Pro Ser Leu Gln Thr
    530                 535                 540

Leu Ile Asp Arg Ala Asp Ala Ala Ile Ser Ser Gly Cys Ala Leu His
545                 550                 555                 560

Leu Glu Asp Tyr Glu Ser Ala Leu Gly Leu Pro Asn Arg Phe Leu Leu
```

```
                565                 570                 575

Pro Lys Gly Gln Ala Gln Gly Met Glu Phe Asn Leu Val Val Ala Val
            580                 585                 590

Thr Asp Gly Arg Thr Asp Ala Ala Leu Asp Asp Leu His Glu Asn Thr
        595                 600                 605

Lys Phe Ile His Tyr Gly Tyr Asp Arg Gln Tyr Pro Asp Lys Arg Pro
    610                 615                 620

His Gly Tyr Pro Leu Asp Arg Arg Val Asp Asp Glu Arg Ile Phe Glu
625                 630                 635                 640

Ala Leu Pro Asn Phe Lys Gln Arg Thr Val Lys Leu Tyr Ser His Glu
                645                 650                 655

Gly Val Asp Gly Gly
            660
```